(19) Europäisches Patentamt
European Patent Office
Office européen des brevets

(11) EP 4 661 376 A1

(12) EUROPEAN PATENT APPLICATION

(43) Date of publication:
**10.12.2025 Bulletin 2025/50**

(21) Application number: **24180811.2**

(22) Date of filing: **07.06.2024**

(51) International Patent Classification (IPC):
***H04L 67/131*** *(2022.01)* ***H04L 65/70*** *(2022.01)*
***H04L 67/60*** *(2022.01)* ***H04N 21/81*** *(2011.01)*
***H04N 21/84*** *(2011.01)* ***H04L 67/566*** *(2022.01)*
***H04L 67/568*** *(2022.01)* ***H04L 43/028*** *(2022.01)*

(52) Cooperative Patent Classification (CPC):
**H04L 67/60; H04L 41/142; H04L 65/70;**
**H04L 67/131; H04L 67/566; H04L 67/568;**
H04L 41/0823; H04L 43/0864; H04L 43/0876;
H04L 43/16; H04N 21/44209; H04N 21/4425

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Dacs Laboratories GmbH**
**40699 Erkrath (DE)**

(72) Inventors:
- **Boeck, Sixten**
  **40237 Düsseldorf (DE)**
- **Densow, Mark**
  **44793 Bochum (DE)**
- **Lange, Björn**
  **50823 Köln (DE)**

(74) Representative: **Cohausz & Florack**
**Patent- & Rechtsanwälte**
**Partnerschaftsgesellschaft mbB**
**Bleichstraße 14**
**40211 Düsseldorf (DE)**

Remarks:
Amended claims in accordance with Rule 137(2) EPC.

(54) **OPTIMIZED APPLICATION STREAMING**

(57) The disclosure inter alia pertains to methods and devices for generating re-ordered application data from original application data of an application, for recording a trace of an application session and for running an application.

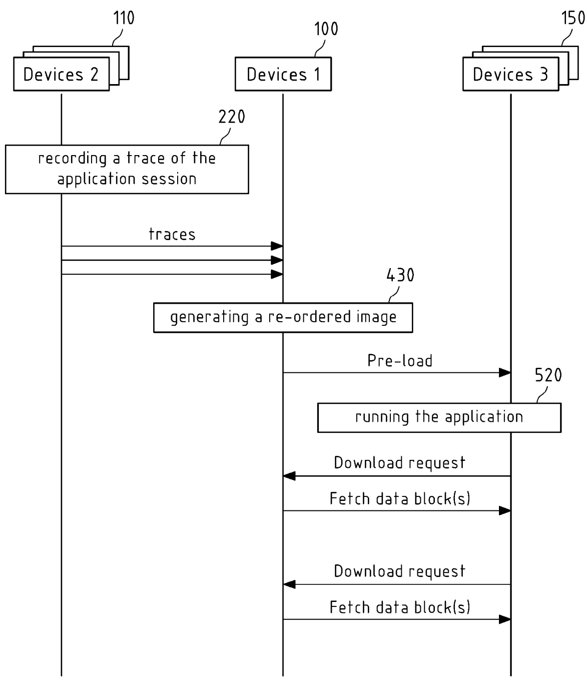


Fig.1b

EP 4 661 376 A1

## Description

### Field of the disclosure

The disclosure relates to the field of application streaming and describes methods related thereto. The disclosure inter alia describes methods for generating application data for application streaming, methods for collecting data used for generating such application data and methods for running applications based on such generated application data.

### Background of the disclosure

The distribution channel of software and applications, and in particular of games, is often the Internet. Since applications may be large and in particular games may reach sizes of many Gigabytes, tens of Gigabytes, or even above 100 Gigabytes, the time to download and eventually start an application may be significant. In order to achieve the shortest possible time to start the application, various approaches have been pursued.

One example is the so called "video streaming" approach, where the application is executed on a remote server and only the audio and video stream of the application is transmitted to a client on which the application is to be used, and only the user input is sent back to the server. The disadvantage of this, however, is that the latency time (i.e. for the audio and video stream to reach the user and for the input to reach the server) may be too long to enable satisfactory and, in particular, a smooth use of the application on the client remote from the server. This is particularly true for gaming applications, especially in the case of actions games, which may require very short reaction and thus latency times. For example, the bandwidth may not be sufficient or latency times of up to several hundred milliseconds may occur, especially for transmissions over the Internet. In addition, a permanent transmission of data in the form of an audio and/or video stream may be necessary, so that the client is permanently online. Also, the data transfer amount increases significantly: typical implementations require a bandwidth of 12 Mbit/s for video streaming of a 1080p resolution. Typical playtimes of modern AAA titles can exceed 60 hours so that the transferred data is 6-10 times larger than the actual game itself: an environmental disadvantage.

To counter these disadvantages, an approach usually referred to as "application streaming" was developed. In this approach, an application is made available to a client by a server on demand.

However, the application is not executed on the server as described above for the "video streaming" approach, but the application itself is transmitted and executed locally by the client. Because the application is executed locally on the client, the performance of the server does not have to be designed to run the application. In addition, high latency times are less problematic or even irrelevant. The actual data transfer remains on the order of the application.

However, as described, in case the application first has to be downloaded completely from a remote server via a network, such as the Internet, many hours may pass before the application can finally be used interactively by a user. Not only do users find this long wait unacceptable, but having to download the entire game can detrimentally impact the "try before you buy" market for applications and especially games; that is, prospective purchasers are effectively discouraged from trying a new application or game simply because the time from when they want to try the application to when they can actually try the application is too long.

In order to counter this disadvantage in particular, the waiting time during the download and installation of the application may be shortened, so that ultimately the time until the application is started is reduced. For example, data chunks of the application can be downloaded until an executable threshold is reached. The application can then be executed while the remaining data chunks of the application continue to be downloaded in the background. This approach can reduce the time before and until an application is started, especially if the application has to be downloaded from a remote server.

However, the data to be loaded before the application starts (also referred to as "pre-load") may still be rather large, and it may even be difficult to determine this pre-load in practice for specific applications. This may in particular be the case for interactive applications (such as games), where the required data chunks strongly depend on the actions of a user (for example, if a user enters a new area of a game, thousands of graphical images, maps, dialog sequences, etc. may be needed to start playing the game in that new area). Further, while the pre-load to be downloaded before the application is started is preferably made as small as possible, it also needs to be made sure that the application once started runs without lagging due to having to download any unavailable data first or prevent crashes due to unavailable data.

Moreover, one can note that after the full or partial download of the application, the application will then typically be stored as usual on the user's local storage, for example their hard disk. In this respect, the actual start process of the application would then, in the best case, be as fast as with a locally installed application. This means that even in this case, although the necessary data is already available locally, the application may still take seconds or even minutes to start before the user can use the application interactively. While these delays may appear negligible, they have the potential to critically undermine the user experience, particularly in applications such as gaming, where timely responsiveness is crucial.

In light of the above, there is the need for further optimizing the application streaming, and in particular methods for generating application data for application streaming, methods for collecting data used for generating such application data and methods for running applications based on such generated application data.

## SUMMARY OF SOME EXAMPLE EMBODIMENTS OF THE DISCLOSURE

In an example, there is a method for generating re-ordered application data from original application data of an application. The method may be performed by at least a (e.g., first) device. The method may comprise generating trace statistics information based on multiple obtained traces of respective application sessions. Each trace may comprise data chunk access information collected during a respective application session. The trace statistics information may comprise information on a determined occurrence position of a respective data chunk based on respective occurrence positions of the respective data chunk in the obtained traces. The method may further comprise generating the re-ordered application data by at least partially ordering the data chunks in the re-ordered application data at least based on the determined occurrence position of respective data chunks. The chains of data chunks may then be used to order application streaming on the first device or on other devices.

Other features of the present disclosure will become apparent from the following detailed description considered in conjunction with the accompanying drawings. It is to be understood, however, that the drawings are designed solely for purposes of illustration and not as a definition of the limits of the present disclosure, for which reference should be made to the appended claims. It should be further understood that the drawings are not drawn to scale and that they are merely intended to conceptually illustrate the structures and procedures described herein.

## BRIEF DESCRIPTION OF THE DRAWINGS

- Fig. 1a shows an example system with examples of first, second and third devices;
- Fig. 1b shows an example communication flow chart;
- Fig. 2 shows a flow chart of an example of a method of the second aspect;
- Fig. 3 shows an example of layers of a file system, which may be implemented in a second or third device;
- Fig. 4 shows a flow chart of an example of a method of the first aspect;
- Fig. 5 shows a flow chart of an example of a method of the third aspect;
- Fig. 6 shows diagrams illustrating an exemplary block ordering according to the average occurrence position;
- Fig. 7 shows a diagram illustrating an exemplary identification of blocks with low relative numbers of occurrences within bins for assigning these blocks to the minority partition;
- Fig. 8 illustrates an example of a loading profile and the determination of a pre-load in dependence of the bandwidth;
- Fig. 9 exemplarily illustrates the average access time in dependence of the block index in the re-ordered image;
- Fig. 10 shows a diagram illustrating an example of determining the average access time for data based on bins;
- Fig. 11 shows a schematic block diagram of an exemplary embodiment of any of the devices according to the present disclosure; and
- Fig. 12 shows a schematic illustration of examples of tangible and non-transitory computer-readable storage media.

## DETAILED DESCRIPTION OF SOME EXAMPLES

As mentioned in the background, there is a need for further optimizing the application streaming, and upon a deeper review, the inventors have identified additional needs. For example, there is a need for optimizing the collection of trace data for determining expected access orders during runtime of an application. Further, there is a need to reliably run an application during data streaming and in particular to handle cases where data may not yet have been downloaded. Further, there is a need to reliably determine a pre-load, so as to keep the pre-load as small as possible but without running out of content. Even further, a shortening of the application start itself (even if the application is already available in a local storage) is desirable. System 1 helps address these needs.

An overview of various embodiments is provided to help with context for the detailed description.

Embodiments of the disclosure in particular allow for starting a game with minimal locally available data at commonly available download speeds. At game start the majority of data still needs to be transferred. Its concept is designed around the idea that data may not be present (underflow situation) and underflows must never lead to significant user experience impairments (stutter, framerate drops, crashes). This is accomplished by an optimization across the memory hierarchy from network via disk to memory access. The solution is based on the interplay of two independent download mechanisms, presorting of the game data, and controlling the file I/O.

The regular download fetches the game data in the background while the game is already running. Due to the interactive game nature, access to data not yet fetched by the regular download is expected during a game session. This data is requested in a second download channel on demand.

However, a naive approach of downloading only the requested data causes a huge number of network round trips. This renders the game unplayable in such scenarios similarly to loading the game using random access from a cloud drive. The access needs to be altered from random to sequential.

By utilizing game data access patterns from multiple game sessions such a pre-sorting can be accomplished. The number of necessary round trips is, therefore, significantly reduced on the second download channel.

Furthermore, data access patterns unrelated to the game session from 3rd-party scanning software such as media players or antivirus programs must be avoided. Otherwise, the available bandwidth for the relevant game data is reduced by those unwanted requests. Besides the network access optimization a file I/O optimization is accomplished by extending the file requests to mimic direct file I/O and utilizing caching.

Further embodiments and examples are now described. A first device may in particular generate reordered application data and/or provide re-ordered application data for download and may in particular be a device of the first aspect. A second device may in particular create a trace comprising data chunk access information when running a session of the application (based on the original application data) and may in particular be a device of the second aspect. A third device may in particular obtain re-ordered application data and run the application based on the re-ordered application data, e.g., during data streaming (i.e. when having received the re-ordered application data only partially) but also after having downloaded the re-ordered application data and may in particular be a device of the third aspect. However, the functionalities of these devices may also be partially or fully combined in a single device. In particular the functionalities of the second and the third device (such as generating and sending traces and receiving reordered application data) may be implemented on a single (user) device.

According to a first example aspect there is disclosed a method for generating re-ordered application data from original application data of an application. The method may be performed by at least a (e.g., first) device. The method may comprise generating trace statistics information based on multiple obtained traces of respective application sessions. Each trace may comprise data chunk access information collected during a respective application session. The trace statistics information may comprise information on a determined occurrence position of a respective data chunk based on respective occurrence positions of the respective data chunk in the obtained traces. The method may further comprise generating the re-ordered application data by at least partially ordering the data chunks in the re-ordered application data at least based on the determined occurrence position of respective data chunks.

According to the first example aspect there is also disclosed re-ordered application data, wherein the re-ordered application data has been generated according to the method of the first aspect. Thus, there is disclosed re-ordered application data, wherein data chunks in the re-ordered application data is at least partially ordered based on a determined occurrence position of respective data chunks, wherein a determined occurrence position of a respective data chunk is based on multiple obtained traces of respective application sessions, each trace comprising data chunk access information collected during a respective application session.

The application may in particular be a user interactive application, in which the order of the required data significantly depends on the user of the application, such as a game, video game or gaming application.

The application data may be understood to be a snapshot of a storage device's structure and data typically stored in one or more computer files, archives, containers, or a filesystem. Alternatively, the application data may be a data sequence of the application data, e.g. held available to be downloaded. For instance, the application data may be or be provided as an image (file) of the application. Accordingly, an image of the application may be considered to represent a storage device having the application installed thereon. Alternatively, the application data may be or be provided as an archive.

Original application data may be understood to be application data having or being provided in an original data sequence. The original application data may also be referred to as a RAW application data. The original application data may be created during an initial write process, such as a regular installation of the application. Accordingly, the files are (or may be considered to be) stored without any fragmentation of the files. Accordingly, the data chunk sequence of the original application data can be considered to be implicitly not fragmented.

Re-ordered application data may be understood to be application data having or being provided in a re-ordered data sequence. The re-ordered application data may also be referred to as target application data (i.e. application data having a target data sequence) or optimized application data (i.e. application data having an optimized data sequence), as it is optimized for application steaming. Re-ordered application data may be understood to be application data in which the order of data chunks is at least partially re-ordered or re-arranged compared to the original application data. As will be explained in more detail, the disclosed approaches allow the data chunk order of the re-ordered application data to be at least partially ordered in an expected access order, i.e., in an order in which it is expected that the application will access or request certain data chunks.

A data chunk may be a block or data block. In this case, the recording of trace information and the processing of requests of data chunks may be implemented on a block level and be performed by a block device (e.g. by a block device driver, as will be explained further below). However, the recording of trace information and the processing of request for data chunks may also be implemented by a file system, a minifilter or hooking. A minifilter may be understood as a filter driver, program or module that extends or modifies the function of devices. It may be inserted into the existing driver stack to perform specific functions (such as the functions described herein). The minifilter usually does not affect the normal working of the existing driver stack in any major way. Hooking is generally understood to encompass techniques used to alter or augment the behaviour of an operating system, of applications, or of other software components by intercepting function calls or messages or events passed between software components (so as to provide the functions described herein).

A trace of an application session may indicate data chunk access information (e.g. read requests) collected during an application session, i.e., while starting and running the application. An application session may be understood as a single run or execution of the application, e.g. until the application is terminated or closed. When the application is restarted, this may be considered a new application session. Alternatively, an application session may also be comprised of multiple runs or executions of the application, i.e. a previous application session may be continued. This may depend on the application type and functionality (such as loading a saved game, which would allow to continue the application at a previous point). For instance, the application may access or request from a file system certain data required for running the application, which corresponds to an access or request of certain data chunks of the original application data. The request may thus be received by a corresponding device driver (such as a block device driver), which accesses the device and reads the respective data chunks so as to provide the corresponding data to the file system. Accordingly, the data chunk access information may be collected below the file system, for instance by the device driver. However, it is likewise possible that the access information to data chunks may be collected by the file system or at the file system level.

In case the data chunks are blocks, a request (e.g. an SRB) may indicate one or more blocks. In case the requests are processed by the file system itself, by hooking or by a minifilter, the requests may indicate a byte range. More generally, at all levels above the block level (such as hooks, minifilters and file system), the read requests may refer directly to a byte range of a file. In this case, the data chunks can be divided programmatically into arbitrary sizes. Generally, the chunk sizes can be identical or of different sizes.

This collection of data chunk access information may be repeated many times (e.g., hundreds or thousands of times) and may be performed by multiple devices, such as the second device described in more detail with respect to the second aspect. Accordingly, these traces may be obtained and may be used for generating trace statistics information. Based on the obtained traces, the generated trace statistics information may at least comprise information on a determined occurrence position of a respective data chunk (such as an average occurrence position in the obtained traces), e.g., for a part of or for each data chunk of the original application data. In an example, a determined occurrence position may take any position between 0 and the recorded maximum position. In an example the determined occurrence position can be the average position or a fraction thereof, as will be explained in more detail below. Thus, the determined position of a data chunk may be understood to be a statistical occurrence position determined based on the multiple traces comprising respective occurrence positions for the respective data chunk. The determined occurrence position may thus be understood to be a data chunk position indicating the order of its access or (read) request. The determined occurrence position of a respective data chunk is understood to not take into account the (relative or absolute) access time, at which the data chunk is requested. The determined occurrence position may be understood to only reflect the order in which data chunks are accessed or requested. Nevertheless, the trace statistics information may comprise further statistical information. For instance, the trace statistics information may further comprise, for a respective data chunk, one or more of: information on a lowest and/or highest occurrence position of a respective data chunk in the obtained traces, information on an earliest access time of a respective data chunk in the obtained traces, information on an average access time of a respective data chunk in the obtained traces, information on a number of occurrences of a respective data chunk in the obtained traces.

Re-ordered application data may then be generated by at least partially ordering at least a part of the data chunks based on a specific re-ordering process, which will be described herein. More specifically, the data chunks in the re-ordered application data may be ordered at least based on the determined occurrence position of respective data chunks, e.g. the data chunk occurrence position averaged over the obtained traces. For instance, the order of data chunks in the re-ordered application data may reflect a statistical occurrence position of the data chunks during runtime of the application. Thus, data chunks which are statistically (e.g. on average) accessed or requested earlier (by means of position, i.e. relative to other data chunks or before other data chunks) by the application are arranged in the beginning of the application data, while data chunks which are statistically (e.g. on average) accessed or requested later (by means of position, i.e. relative to other data chunks or after other data chunks) by the application are arranged in the end of the application data. It is noted that this ordering criterion does preferably not consider the specific time at which a certain data chunk is requested, but only its position in the order of data chunk requests. This allows traces to be made comparable and to be used, even though data chunks are requested at different times in different traces. Considering the scenario of a game, different users may play the game at different speeds or may leave the game running during a break. Such situations do not affect the respective occurrence position of data chunks in a respective trace so that the use of a so determined occurrence position of respective data chunks is advantageous.

However, even though the re-ordered application data reflects the determined occurrence position of respective data chunks, it has been found that this approach alone may cause a significant fragmentation of the files, which may in turn decrease the runtime performance of the game. To provide an illustrative example, consider two different language files for a certain processing point in the application (e.g. an audio dialogue played in a certain cut scene), wherein in one session of the application (of a user choosing one language voice-over) the data chunks of the one language file may be requested, while at the same processing point of a different session of the application (of a user choosing another language voice-over) the data chunks of the other language file may be requested. This example illustrates that the ordering according to a determined (e.g. the average) occurrence positions of these files will be similar and the data chunks of these two files will be intertwined or interlaced with each other when ordering the data chunks according to their determined occurrence position. This in turn may result in a reduced runtime or disk performance, when only the data chunks of one of these files is accessed.

In an example, chains of data chunks having subsequent indices in the original application data may be at least partially maintained. Thus, it has been found to be advantageous to employ a secondary ordering criterion, namely by at least partially maintaining chains of data chunks having subsequent indices in the original application data. Thus, when subsequent data chunk indices of the original application data also appear sufficiently close together when ordering the data chunks based on their determined occurrence position, it can be assumed that these data chunks e.g., pertain to a specific file, which is usually accessed as a whole within a limited number of access requests. Therefore, chains of data chunks having subsequent data chunk indices in the original application data, which also appear sufficiently close together, when ordering the data chunks based on their determined occurrence position, may be maintained as such a chain also in the re-ordered application data, e.g., in the order of the data chunk indices of the original application data. That a chain is maintained may be understood to mean that the data chunks of a chain may be ordered within that chain and with respect to each other in line with the (relative) ordering of these data chunks in the original application data. Thus, in other words, the identified chains are not interrupted by other data chunks even though the determined occurrence position of respective data chunks would indicate such an ordering when used as the sole ordering criterion.

Examples of how an ordering according to the determined occurrence position of the data chunk can be achieved while at the same time observing this secondary ordering criterion are provided in the following.

In an example, the determined occurrence position is an average occurrence position of a respective data chunk in the obtained traces. Thus, the determined occurrence position may be an average occurrence position of a respective data chunk in the obtained traces. Thus, the occurrence position of a respective data chunk in multiple traces (e.g. in chains of a read requests during application sessions) is obtained and these respective occurrence positions are then averaged according to a suitable statistical principle to determine the average occurrence position of the respective data chunk. An average may generally be understood to be a mean, an arithmetic mean, a mid-range, a median, a mode, a geometric mean or any other suitable measure of central tendency.

In an example, a data chunk having a certain index in the original application data may be considered as a part of a (current) chain to be maintained in the re-ordered application data, when its determined occurrence position is within a predefined number of data chunks from the determined occurrence position of the data chunk having the previous index in the original application data. Thus, data chunks with a difference in determined occurrence position larger than the predefined number or threshold (such as 500, 1000, 2000 data chunks) are assumed to be part of no chain or a different chain and are thus excluded from the current chain. Likewise, in case the determined occurrence position of a currently assessed data chunk is lower than the determined occurrence position of the (previously assessed) data chunk having the previous index in the original application data, the data chunk having a certain index in the original application data may not be considered part of the chain (but part of no chain or a different chain). Thus, in other words, only data chunks which have a higher or equal determined occurrence position than the determined occurrence position of the previous data chunk (but still less than a predefined threshold) may be considered part of a current chain.

In an example, the method may comprise assigning a currently assessed data chunk to a new chain of data chunks, in case a determined occurrence position of the currently assessed data chunk is lower than a determined occurrence position of a previously assessed data chunk or whether the determined occurrence position of the currently assessed data chunk is larger than a predefined threshold plus the determined occurrence position of the previously assessed data chunk. Otherwise, the (currently assessed) data chunk may be appended to a current chain of data chunks. Data chunks which are successfully assigned to a chain may then be kept together and may be ordered (within that chain and with respect to each other) in line with the relative ordering of the data chunks of the original application data (but at a different absolute or global position in the re-ordered application data).

In an example, the re-ordered application data comprises partitions. The partitions may at least comprise a majority partition (which may also be referred to as a first partition) and a minority partition (which may also be referred to as a second partition). Dividing the re-ordered application data into partitions allows to order the data chunks into different parts of the re-ordered application data. The majority partition may be located before the minority partition in the re-ordered application data. Thus, in case the application data is transmitted to another device (such as a third device for running the application based on the re-ordered application data), the data chunks of the majority partition will be transmitted first. The re-ordered application data may also comprise or be divided into further partitions (as will be detailed further below). For assigning the data chunks into respective partitions, the trace statistics information may comprise information on a number of occurrences of a respective data chunk in the obtained traces. The number of occurrences (which may also be referred to overall occurrence count or request count) may indicate how often a specific data chunk has been requested overall based on the obtained traces, i.e., the number of occurrences for a respective data chunk may for instance indicate the absolute number of requests for this data chunk. For instance, the data chunks may be assigned either to the majority partition or the minority partition based on the information on a number of occurrences of the respective data chunks.

The aspect of partitions as described herein shall also be considered to be disclosed as a separate aspect, irrespective of how the re-ordered application data is created. Thus, this aspect may be considered disclosed not only with a re-ordered application data as described in the first aspect but also for re-ordered application data, in which the data chunks are generally re-ordered (compared to the original application data) at least based on an expected access order. Accordingly, there is also disclosed a method for generating re-ordered application data from original application data of an application, performed by at least a first device, the method comprising: generating trace statistics information based on multiple obtained traces of respective application sessions, each trace comprising data chunk access information collected during a respective application session; and generating re-ordered application data by at least partially ordering the data chunks in the re-ordered application data at least based on an expected access order based on the trace statistics information. The re-ordered application data may at least comprise a majority partition and a minority partition, wherein a method may further comprise assigning data chunks either to the majority partition or the minority partition based on an information on a number of occurrences of the respective data chunks in the obtained traces.

For instance, as will be explained in more detail below, the majority partition may comprise data chunks accessed during a majority of application sessions. For instance, the minority partition may thus comprise data chunks accessed during a minority of application sessions, which may include data chunks not accessed during any session (i.e. not accessed at all). In a simple approach the least accessed data chunks (the data chunks with an overall lowest number of occurrences, e.g., below a threshold) may be assigned to the minority part and the more often accessed data chunks (the data chunks with the overall lowest number of occurrences, e.g. above a threshold) may be assigned to the majority partition. However, a more sophisticated approach may be advantageous as will be explained below. In an example, the data chunks may for instance first be separated or assigned either to the majority partition or the minority partition.

Thus, in an example, for at least a part (e.g., all) of the data chunks in the original application data, it may be first determined or checked whether a data chunk (currently assessed) is to be assigned to the minority partition. If so, the data chunk is assigned to the minority partition. Otherwise, it will be assigned to the majority partition, and it may be determined or checked whether a determined occurrence position of the data chunk is lower than a determined occurrence position of the previous assessed data chunk or whether the determined occurrence position of the data chunk is larger than a predefined threshold higher than the determined occurrence position of the previously checked data chunk. In either case, the data chunk is assigned to a new chain of data chunks. Otherwise, the data chunk is appended to a current chain of data chunks.

In an example, said ordering of the data chunks is at least performed for data chunks assigned to the majority partition. In a preferred embodiment said ordering of the data chunks is only performed for data chunks assigned to the majority partition. In other words, only the data chunks of the majority partition may then be ordered according to the approach as described herein (i.e., ordering the data chunks at least based on the determined occurrence position of respective data chunks, wherein chains of data chunks having subsequent indices in the original application data are at least partially maintained). The data chunks assigned to the minority partition may for instance be ordered based on the determined occurrence position of respective data chunks only or kept in the ordering as present in the original application data.

Optionally, the partitions of the re-ordered application data further comprise one or more of the following partitions: a file system partition, a required partition and/or an undefined partition. The file system partition may comprise data chunks required for mounting the re-ordered application data. Alternatively, theses data chunks may be part of the majority partition. A required partition may comprise data chunks which are specifically selected to be prioritized. This partition may be left empty. An undefined partition may comprise data chunks which have not been accessed during the application sessions. Alternatively, these data chunks may be assigned to the minority partition.

For instance, said assigning of data chunks into the majority partition and the minority partition of the re-ordered application data is performed bin-wise for bins of determined occurrence positions. For instance, for a separation of data chunks between the majority partition and the minority partition, data chunks with a sufficiently large number of occurrences are assigned to the majority partition, wherein data chunks without a sufficiently large number of occurrences are assigned to the minority partition. For instance, the number of occurrences may be considered sufficiently large or small when compared to the numbers of occurrences of data chunks within a respective predefined bin of determined occurrence positions. For instance, a number of occurrences may be considered sufficiently large in case the number of occurrences is above a predefined threshold, where the threshold is preferably a local threshold based on the numbers of occurrences of data chunks within a respective predefined bin of determined occurrence positions.

For example, based on the trace statistics information, the data chunks may be ordered according to their determined occurrence position. Then, bins may be created, wherein each bin comprises or spans a certain region or interval of determined occurrence positions. For instance, a bin may comprise a certain predefined number of determined occurrence positions or data chunks, e.g., 100.000, 200.000, 250.000, 500.000 data chunks or any other suitable number. In particular a bin size of around 250.000 data chunks (corresponding to 1GB of data) has been found to be effective. Then, the data chunks having determined occurrence positions in one bin may be considered and data chunks below (or above) a certain threshold (e.g., the determined number of occurrences or occurrence count in said bin or a fraction thereof) may be assigned to the minority (or majority) partition.

For instance, the method may further comprise receiving traces from multiple second devices, in particular as recorded according to a method of the second aspect, as described below. On each of these second devices respective application sessions may be executed and respective data chunk access information may be collected so as to create a specific trace of the application session. The traces may then be used for generating the trace statistics information as described.

For instance, the method may further comprise sending the re-ordered application data to one or more third devices based on the data chunk order of the re-ordered application data for running the application at a respective third device, in particular according to a method of the third aspect, as described below. The sending of the data chunks of the reordered application data may be based on (or correspond to) the data chunk order as indicated by the re-ordered application data. Thus, a respective third device may receive and locally store the data chunks in the order as indicated by the re-ordered application data.

In an example, the method may comprise determining a loading profile indicating the overall data required from the re-ordered application data when running the application from the re-ordered application data in dependence of time (e.g., the expected access time of the corresponding amount of data). The loading profile may indicate the time at which the corresponding amount of data needs to be available at the executing device for running the application. Accordingly, the loading profile will be a monotonously rising function indicating the amount of data in dependence of time. As will be explained below, such a loading profile may for instance be used to determine (e.g., by the first device or by a third device) the pre-load required for a specific executing device having a specific bandwidth for downloading the re-ordered application data so that the (third) device running the application based on the re-ordered application data does not run out of data or content.

For instance, the trace statistics information comprises information on an average access time of a respective data chunk in the obtained traces, wherein the loading profile is determined based on the average access times of respective data chunks of the re-ordered application data. However, due to different usages of an application and depending on the ordering or sorting approach applied, the average access time values may fluctuate when considering the data chunks re-ordered according to the order of being expected to be requested. Thus, the average access time of respective data chunks may be assumed to be a mean of the average access times of surrounding data chunks.

Accordingly, in a further example, the average access time of respective data chunks of the reordered application data is assumed to be, for data chunks within a bin of data chunks of the reordered application data, an average (or mean) of the average access times within the bin. Each bin may have a predetermined width of a certain number of data chunks, such as 5.000, 10.000 or 15.000 data chunks.

As a result, information on the mean average access times in dependence of the sorted determined occurrence positions is obtained, which may be considered to correspond to a smooth histogram. This information may allow to obtain a monotonously rising envelope function, which may be used as the loading profile.

The loading profile in turn allows to determine, for a specific bandwidth available for downloading the re-ordered application data, a (dynamic) pre-load time, which will likely result in that requested data chunks will already be downloaded when requested from the application.

Thus, in an example, the information representative of the loading profile is sent (e.g., to a third device for running the application based on the to be downloaded re-ordered application data) for determining a dynamic pre-load based on a bandwidth available (at the third device) for downloading the re-ordered application data. When the loading profile is available at the third apparatus, the third apparatus is able to dynamically determine the expected pre-load for the third device. Alternatively, the loading profile may be used by the first device to determine a pre-load for a specific third device and provide this information to the third device. In either case, the third device may (e.g., before or at starting of the application) first wait for the pre-load to be received before starting or continuing with the application.

The aspect of determining a loading profile as described above shall also be considered to be disclosed as a separate aspect, irrespective of how the re-ordered application data is created. Thus, this aspect may be considered disclosed not only with re-ordered application data as described in the first aspect but also for re-ordered application data, in which the data chunks are re-ordered (compared to the original application data) at least based on an expected access order. Accordingly, there is also disclosed a method for generating re-ordered application data from original application data of an application, performed by at least a first device, the method comprising: generating trace statistics information based on multiple obtained traces of respective application sessions, each trace comprising data chunk access information collected during a respective application session; and generating re-ordered application data by at least partially ordering the data chunks in the re-ordered application data at least based on an expected access order based on the trace statistics information. The method may further comprise determining a loading profile indicating the overall data requested from the re-ordered application data when running the application from the re-ordered application data in dependence of the expected access time.

According to a further aspect there is also disclosed a method of sending application data, which may in particular be performed by the first device. The method may comprise sending re-ordered application data to a third device based on a data chunk order of the re-ordered application data for running the application at the third device. The re-ordered application data may have been generated from original application data according to a method of the first aspect.

According to a second example aspect there is disclosed a method of recording a trace of an application session, performed by at least a second device. The method may comprise running a session of the application. The method may further comprise recording a trace of the application session, the trace comprising data chunk access information collected during the application session. The method may further comprise at least partially intercepting data chunk access of other applications from being recorded in the data chunk access information of the application session.

As already explained with respect to the first aspect, the application may for instance run on a device (e.g. block device) with device driver (e.g. block device driver), which allows to record data chunk access information, when the application accesses or requests certain data required for running the application from a file system, which is forwarded to the device driver for an access or request of certain data chunks of the device. Accordingly, the data chunk access information may be collected below the file system, for instance by the device driver.

However, it has been found that other or third-party applications (e.g. software, tools, background processes), such as for instance an antivirus software or a media player application, start to access or scan newly mounted devices. Thus, when the original application data (e.g. an image) is mounted on the device for recording data chunk access information, these applications will also start creating data chunk requests on the device when accessing or scanning the device (e.g. for viruses or potential media files). However, this creates unwanted access patterns, which are not due to the access of the application itself but due to other applications, which may, in the worst case, render a recorded trace with data chunk access information useless.

Thus, according to the second aspect, data chunk access of one or more other applications are at least partially intercepted from being recorded in the data chunk access information of the application session. As explained further below, the intercepting of unwanted data chunk access may be performed by a filter, e.g., minifilter. In an example, the data chunk access of the other applications may be denied. For instance, the other application may receive information indicating that the access is denied or that the device is empty. In another example the requested data chunks may be returned to the other application, but the access may not be recorded by the device driver.

For instance, the method may further comprise determining (e.g., by a filter or file system) whether a data chunk access originates from an allowed application (e.g. the application itself or a whitelisted application) or an unallowed application (e.g. an application other than the application itself, a not-whitelisted application or a blacklisted application). Thus, a whitelist and/or a blacklist may be used for determining whether a data chunk access of another application is allowed or recorded. In case the application is an allowed application, the data chunk access information is collected as usual. In case the application is an unallowed application the data chunk access is intercepted from being recorded in the data chunk access information.

For instance, the recoding of a trace may be performed by a device driver (e.g. a block device driver). The described intercepting of data chunk access may be performed by a filter (e.g., a minifilter). Alternatively, the intercepting of data chunk access may be performed by a file system. While the latter would require creating a specific file system, the filter-approach allows to implement the functionality with a filter e.g. as a minifilter in an existing file system. The device (e.g. block device) may be arranged below (i.e., in a layer below) the file system. The filter may be implemented above (i.e. in a layer above) the filesystem. Thus, the file system may be located between the filter and the device.

In an example, the method may comprise sending the trace of the application session to a first device for generating re-ordered application data, in particular according to a method of the first aspect.

According to a third example aspect, there is disclosed a method of running an application, performed at least by a third device. The method may comprise receiving re-ordered application data of the application for storing in a local storage, wherein the data chunks in the re-ordered application data are ordered in an expected access order when running the application. The method may further comprise running the application based on the received re-ordered application data. In case a request of the application requests one or more data chunks, which are already present in the local storage, the request may be answered with the one or more data chunks present in the local storage. In case a request of the application either accesses or requests one or more data chunks, which are not yet present in the local storage, the request is re-inserted into the request queue.

In examples, the request may be re-inserted into the request queue by (re-)appending the request to the request queue or by (re-)prepending the request to the request queue.

Re-ordered application data with data chunks ordered in an expected access order as requested by the application during runtime may be obtained in different ways. It may be referred to the aspects described above for example of how such re-ordered application data may be obtained. In one example, the re-ordered application data has been generated based on a method according to the first aspect. The application data may be stored in the local storage, wherein the data chunks are (physically) stored in the received data chunk order in the local storage, i.e., stored in the expected access order when running the application. It has been found that not only receiving but also storing the data chunks physically in the expected access order improves the disk performance of the application (e.g., shortens loading times), even when the game is already completely stored in a local storage.

It may be determined or checked whether or not one or more data chunks requested by the application are already present in the local storage. The local storage may for instance be a non-volatile memory, such as a hard drive (e.g., a solid state disk), of the third device. In case a request of the application points to one or more data chunks, which are already present in the local storage, the request may be answered with the one or more data chunks present in the local storage. In case a request of the application points to one or more data chunks, which are not yet present in the local storage, the request is re-inserted into the request queue (e.g., an SRB queue in case of blocks).

For instance, in case a request of the application requests one or more data chunks, which are not yet present in the local memory, a download request for the one or more data chunks may be made (e.g., to be downloaded from a remote device such as a first device). For instance, in case a request of the application requests one or more data chunks, which are not yet present in the local storage, sending a download request (e.g. to the first device) to obtain at least the one or more data chunks, which are not yet present in the local storage. For instance, in response to the request, the third device may receive more data chunks than requested (i.e. additional data chunks in the next positions according to the re-ordered application data). As the data chunks are stored in the reordered application data in the order expected to be required by the application. The additionally sent data chunks probably needed next by the application can be stored on the local storage in advance.

It has been found that it is not necessary to hold or pause the request queue and/or to pause the application. Rather, it has been found that re-inserting the request into the request queue will usually sufficiently delay the processing of the request so that in the meantime, until the request is again processed in the request queue, the requested data chunk(s) are downloaded and available in the local storage. However, even if that should not be the case, the request may again be re-inserted. In other words, the request may be re-inserted into the request queue even multiple times until the requested data chunk(s) are available. It has been found that the application continues to function properly. For instance, in case of a game requesting a higher resolution texture, the game will continue to work properly with the already present lower resolution texture until the higher resolution texture has been downloaded which will then simply replace the lower resolution texture in game. Such a process may even go unnoticed by the user.

For instance, the method may comprise receiving information representative of a loading profile indicating the overall data requested from the re-ordered application data when running the application from the re-ordered application data in dependence of time (e.g., the expected access time of the corresponding amount of data). The loading profile may be a loading profile as already described with respect to the first aspect. The method may further comprise determining a dynamic pre-load based on a bandwidth available at the third device for downloading the re-ordered application data to the third device, as also described above. For instance, it may be determined based on the pre-load profile how large the pre-load needs to be such that the third device does not run out of content (i.e., requested data chunks are expected to already be locally available at the third device) when running the application based on the re-ordered application data during data streaming.

For instance, the method may comprise at least partially intercepting requests for data chunks of one or more other applications. Similarly to what has been discussed with respect to the second aspect, access to or requests for data chunks originating from one or more other applications are at least partially intercepted. This will avoid that data chunks, which are not yet present in the local storage, need to be downloaded, only because an application (such as an antivirus software or a media application) other than the application itself wants to access (i.e. read) certain data chunks. Accordingly, in case of such an interception, the request of the other application for one or more data chunks, which are not yet present in the local storage, will not trigger a download request to obtain the one or more data chunks, which are not yet present in the local storage. As already explained above, the intercepting of such unwanted data chunk requests may be performed by a filter, e.g., minifilter. In an example, the data chunk access of the other applications may be denied.

For instance, the other application may receive information indicating that the access is denied or that the device is empty. This functionality may be implemented in the same manner as described with respect to the second device. Thus, for instance, the method may further comprise determining (e.g., by a filter or file system) whether a request for data chunks originates from an allowed application (e.g. the application itself or a whitelisted application) or an unallowed application (e.g. an application other than the application itself, a not-white listed application or a blacklisted application).

According to a further disclosed aspect, which may be combined with any of the above aspects, there is disclosed a method for obtaining a patch for re-ordered application data or applying a patch to re-ordered application data (e.g., re-ordered application data as describe herein). A patch may be understood to be a set of changes to the application designed to update or repair it. This may include bugfixes, removal of security vulnerabilities and/or error corrections. Additionally or alternatively, a patch may improve the functionality, usability, or performance of a program. The re-ordered application data may be application data stored at a first device and available for download or downloaded and stored at a third device, for instance. It has been found that due to the size of modern applications state-of-the-art diff algorithms cannot compute patches between first and second re-ordered application data efficiently. The method may for instance comprise obtaining an unpatched re-ordered application data (e.g., re-ordered application data based on original application data of an unpatched application) and patched re-ordered application data (e.g. reordered application data based on original application data of a patched application). The method may comprise obtaining a patch based on unpatched (e.g. first) re-ordered application data and patched (e.g. second) re-ordered application data. The method may comprise identifying identical data chunks in the first and second re-ordered application data. The method may comprise removing the identified identical data chunks. The method may comprise applying a diff calculation (e.g., applying a diff algorithm) on the remaining data of the first and second re-ordered application data. Thus, the method may comprise obtaining or computing a patch for the unpatched re-ordered application data. The obtained patch may be provided to a second or third device. The method may comprise migrating the expected access data chunk order of the unpatched re-ordered application data to the patched re-ordered application data by using a mapping between the shared data of the patched and unpatched re-ordered application data. For instance, the method may comprise reordering the reusable data of the unpatched re-ordered application data (e.g., based on the mapping) and downloading new data from the patched re-ordered application data. This allows for a progressive application start during the download of the new patch data.

According to a further disclosed aspect, which may be combined with any of the above aspects, there is disclosed a method for optimizing re-ordered application data or updating a data chunk order of the re-ordered application data (e.g., re-ordered application data as describe herein) so as to obtain updated re-ordered application data. For instance, the method may comprise obtaining (e.g. downloading) an index file of (e.g. updated, newer or latest) re-ordered application data and update the data chunk order of the re-ordered application data in the user's storage according to the index file. An index file may indicate a mapping between the positions of data chunks of (e.g. first, present or locally stored) re-ordered application data and the positions of data chunks of (e.g. updated, newer or latest) re-ordered application data. The reordering can happen in-place by swapping single data chunks in the existing re-ordered application data (low storage approach), or by copying the data chunks in the new order into new re-ordered application data and delete the previous one (low computation approach).

According to a further disclosed aspect, which may also be combined with any of above aspects, there is also disclosed an (import) method of converting (e.g., locally stored or installed) original application data of the application (e.g. a natively installed build of the application) into re-ordered application data (e.g. re-ordered application data as described herein). The method may comprise patching the original application data into re-ordered application data, for instance with a patching approach as described (but with applying the patch to the original application data).

According to a further disclosed aspect, which may also be combined with any of the above aspects, there is also disclosed an (export) method of converting re-ordered application data into original application data or native installation of the application. For instance, the method may comprise extracting and moving the application data from re-ordered application data to a (e.g., user specified) location, e.g. by mounting the re-ordered image and performing a copy operation of the files stored on the re-ordered image. The method may further comprise creating registry keys and/or meta files to mimic a standard installation process of the application. This export restores the native application build in an installed-like fashion.

According to any of the above aspects, there is also described a (first, second or third) device comprising means for performing a method according to a respective aspect.

In a further aspect, there is also disclosed a system. The system may comprise a first device comprising means for performing a method according to the first aspect. The system may comprise a second device comprising means for performing a method according to the second aspect. The system may comprise a third device comprising means for performing a method according to the third aspect.

The means or functionality of any of the disclosed devices can be implemented in hardware and/or software. They may comprise one or multiple modules or units providing the respective functionality. They may for instance comprise at least one processor for executing instructions for performing the required functions, at least one memory storing the instructions, or both. Alternatively, they could comprise for instance circuitry that is designed to implement the required functions, for instance implemented in a chipset or a chip, like an integrated circuit. In general, the means may comprise for instance one or more processing means or processors.

Thus, according to the respective exemplary aspects of the present disclosure, there is in each case also disclosed a respective device comprising at least one processor and at least one memory storing instructions that, when executed by the at least one processor, cause the respective apparatus (e.g. the first, second or third device) at least to perform a method according to the respective aspect of the present disclosure.

Any of the above-disclosed exemplary aspects may, however, in general be performed by a device, which may be a module or a component, for example a chip. The disclosed devices may comprise the disclosed components, for instance means, processor, memory, or may further comprise one or more additional components.

According to the exemplary aspects of the present disclosure, there is in each case also disclosed a computer program, the computer program when executed by a processor of a respective device (e.g., the first, second or third device) causing said apparatus to perform a method according to the respective aspect.

The instructions, for instance processor instructions, may be stored on a storage medium that is readable by a processor, in particular a transitory and/or non-transitory medium. Accordingly, there is for each aspect also disclosed a computer readable storage medium having stored thereon the computer program according to a respective aspect. The storage medium could for example be a disk or a memory or the like. The storage medium may be intended for taking part in the operation of a device, like an internal or external memory, for instance a Read-Only Memory (ROM) or a hard disk, or be intended for distribution of a program or library including the instructions, like an optical disc.

It is to be understood that the presentation of the embodiments disclosed herein is merely by way of examples and non-limiting.

Herein, the disclosure of a method step shall also be considered as a disclosure of means for performing the respective method step. Likewise, the disclosure of means for performing a method step shall also be considered as a disclosure of the method step itself.

In the following description of the figures, the (original/re-ordered) application data is considered to be or be provided as an (original/re-ordered) image. However, as indicated in the general description, this is to be considered merely as an example and the following description also applies to application data which is provided or stored in any other form, e.g. the application data may likewise be provided in any other form, such as container files, archives, or a data sequence held available to be downloaded.

Furthermore, in the following description, the data chunks are described as data blocks. However, this example is considered to be merely an example and the following description also applies to data chunks other than data blocks.

Further, in the following description, the determined occurrence position is assumed to be an average position. However, this example is considered to be merely an example and the following description also applies to other statistically determined occurrence positions of data chunks, Which are based on respective occurrence positions of the respective data chunk in the obtained traces.

Fig. 1a shows an example system 1 of various example devices according to the different aspects for performing the methods according to the different aspects. The device (e.g. server) 100 is an example of a first device and may perform a method according to the first aspect. Thus, device 100 may generate a re-ordered image from an original image of an application. Generally, the functionality of the first method may also be distributed over multiple devices.

Devices 110 are examples of second devices and may perform methods according to the second aspect. Thus, each of devices 110 may record a respective trace of an application session based on an original image. Devices 110 may be connected to server 100 over a network 130, such as a local network or the internet. Devices 110 are controlled by users 120. Users 120 may use an application, wherein block access information of the application is collected on these devices. The devices 110 may send respective traces of application sessions to server 100.

Devices 150 are examples of third devices and may perform methods according to the third aspect. Thus, devices 150 may receive a re-ordered image (e.g. from device 100) via data streaming and run an application based on a re-ordered image. Devices 150 may be connected to server 100 over a network 140, such as the internet. Generally, devices 110 and 150 may be different devices but they may also be the same device, e.g. a device providing the functionality of a method of the second and third aspect. Devices 150 are controlled by users 160. Users 160 may use the application based on the received re-ordered image.

The functionality of a second device (such as device 110) will be explained in more detail with respect to the communication chart of Fig. 1b and the flow chart 200 of Fig. 2 and Fig. 3.

The second device (or each of the second devices) runs a session of the application, action 210. The second device records a trace of the application session and the trace comprises block access information collected during the application session, action 220. In more detail, the application may be installed on a block device and the recording of a trace may be performed by a block device driver. As illustrated by the layers 300 of an operating system in Fig. 3, the I/O requests from the file system 320 to the block device 340, on which the application may be installed, may be managed by the block device driver 330. The block device drivers may be a computer program or software module that controls the interaction with the hardware of the underlying layer 340. The device driver may communicate with the file system 320 in the layer above, which in turn communicates with system call routines, which can be used by the application. If the application requires certain data blocks, these are requested via the file system 320. This request is then handled by the block device driver 330, which can access the application installed on the image of the block device 310, and the required data blocks are returned. The block device driver 330 may record a trace comprising block access information. For instance, the write and/or read operations in the block device driver 330 are extended in such a way that the requested data block is logged (for example by logging a block number that uniquely identifies the data block). Thus, the required block sequence of the data blocks needed to execute the application is logged by means of the block device driver 320. In addition, time information is logged in the form of a time offset. Further information such as application-specific events or user-specific information can also be logged.

However, other applications may try to access the block device and interfere with the block requests of the actual application of interest. This interference critically and negatively impacts the ability of the example system to efficiently and effectively order the blocks for future loading/downloading. More specifically, when a drive is being mounted, several software packages may automatically start scanning the new drive. Examples are antivirus applications or media players. These software packages would create unwanted access patterns, which could impair the trace comprising block access information or even render it useless. Thus, block access of one or more other applications may be intercepted from being recorded in the block access information of the application session, action 230. The intercepting of block access information may in an example be performed by a filter, such as minifilter 310 shown in Fig. 3. A filter (or alternatively a modification of the file system 320) can be used to intercept any access from non-whitelisted processes. Note, that the in-memory protection of antivirus software is not compromised as the blocks are still processed between filters. Alternatively, achieving unimpaired block access information could also be accomplished with process isolation or containerization.

The implementation shown in Fig. 3 is "sandwiching" the file system 320, e.g., a minifilter 310 is placed on-top of the file system 320, the block driver 330 below. "Above", "on-top", and "below" are relative terms here and merely indicate an order of processing file system requests, where "above" is closer to the application layer and "below" is closer to the storage system. Alternatively, the same functionality can also be accomplished by implementing a file system directly.

As illustrated in Fig. 1b, each of the second devices 110 may send respective traces of the application session to the first device 1. The first device (such as device 100) may then generate a re-ordered image. An example of generating a re-ordered image will be explained in the following.

More specifically, the functionality of a first device (such as device 100) will now be explained in more detail with respect to the communication chart of Fig. 1b and the flow chart 400 of Fig. 4 and Figs. 6 to 10.

The first device receives, from multiple second devices, various traces of respective application sessions, each trace comprising block access information collected during a respective application session on a respective second device, action 410.

Based on these multiple obtained traces, the first device generates trace statistics information, which at least comprise information on a determined (in this case an average) occurrence position of a respective block in the obtained traces, action 420.

The trace statistics information may be obtained from individual application (e.g. game) sessions as uploaded trace files. Generally, from these traces the first device may generate one or more of the following statistics information for at least some blocks (e.g. a majority of the blocks or even each block) of the application data:

| | |
|---|---|
| *minPos* | - lowest occurrence position in all traces |
| *avgPos* | - average occurrence position in all traces |
| *maxPos* | - highest occurrence position in all traces |
| *minTime* | - earliest access time in all traces |
| *avgTime* | - average access time in all traces |
| *maxTime* | - latest access time in all traces |
| *N* | - cumulative occurrence count in all traces |

It will now be described how, based on these trace statistics information, a re-ordered image may be generated by at least partially ordering the blocks in the re-ordered image based on the average occurrence position of respective blocks (avgPos), action 430.

First the re-ordered image will be partitioned into one or more of the following partitions, preferably at least a majority partition and a minority partition, in the following order:
[Filesystem][Required][MajorityPart][MinorityPart][Undefined]

The filesystem partition *[Filesystem]* may comprise all data necessary for mounting a drive. Underflow handling can only be utilized on already mounted drives. This is typically the content of the file system.

The required partition *[Required]* may comprise manually selected data which should be delivered upfront. This may be data belonging to all *.exe or *.dll files. In practice, however, this is rarely applied and this part is kept empty.

The majority partition *[MajorityPart]* may comprise data which was requested by the majority of game sessions.

The data are stored sorted according to their average position and are piecewise defragmented.

The minority partition *[MinorityPart]* may comprise data which was requested only by a minority of game sessions and are removed from the majority partition in order to keep pre-load sizes as small as possible. Instead they are supposed to be fetched dynamically during on-demand requests. Thus, it is advantageous if the blocks in this part are sorted.

The undefined partition *[Undefined]* may comprise data which has never been accessed during respective application sessions. They may be stored in their original sequence.

It now needs to be determined which blocks are assigned to which partition (Confidence Partitioning). In order to identify the affiliation of blocks in particular to the three confidence partitions *[MajorityPart]*, *[MinorityPart]*, and *[Undefined]* a histogram over the average position of each block is being computed from the trace statistics. For instance, all blocks with a number of occurrences of N=0 belong to the partition *[Undefined]*, all blocks with a number of occurrences $N < t^{Majority}$ (i.e. smaller than a predefined threshold) to the minority partition *[MinorityPart]* and all blocks with a number of occurrences $N \geq t^{Majority}$ (i.e. larger or equal than a predefined threshold) to the majority partition *[MajorityPart]*. This approach is illustrated in Fig. 6. The histogram 610 shows the number of occurrences of respective blocks (y-axis) in dependence of their average occurrence position (x-axis). Certain blocks may be requested on average at an earlier occurrence position, but may not be requested very often ("low occurrence"). These blocks may not be needed by the application for many users, so that they could be moved back in the re-ordered image, as illustrated in histogram 620.

However, the approach of the separation between the majority partition and minority partition may be improved as described in the following with respect to Fig. 7.

For instance, considering the use case of a game, some users may not finish the game so that it is likely that during the beginning of a game the I/O sampling will be larger than in the final part of the game. Therefore, when identifying rare access patterns it is beneficial to apply the analysis only in the local vicinity of a block relative to its neighborhood environment.

For instance, in an example implementation, the block affiliation to the majority partition and the minority partition is being determined by comparing its occurrence count with the average occurrence count of blocks in the same local region. Thus, the assignment of blocks into the majority partition and the minority partition of the re-ordered image is performed bin-wise for bins of average occurrence positions. The region or bin size may for instance be set to 250.000 blocks (equivalent to 1 GB of data). However, other bin sizes may be used as well. This approach is illustrated in Fig. 7. As in Fig. 6, the histogram 710 of Fig. 7 also shows the number of occurrences of respective blocks (y-axis) in dependence of their average occurrence position (x-axis). For each of the bins (bin1, bin2, bin3, bin4, bin5 and bin6, separated by vertical dashed lines), the average number of occurrences for a bin is indicated with a horizontal line. This creates a local threshold based on the mean numbers of occurrences of blocks within each of the bins. Blocks which have a number of occurrences below said bin-specific average of the number of occurrences or a fraction thereof may be considered to have a low relative occurrence (indicated by arrows in Fig. 7). The average positions which are considered as "low relative occurrence" are those below the average occurrence of the corresponding bin or a fraction thereof. In the illustration of Fig. 7, the values in bins 3 and 5 are above the mentioned fraction and, thus, are not considered as "low relative occurrence". Values of the fraction may be set for example between 10% and 20% of the average occurrence, but other ranges may be different depending on the number of blocks, the expected performance of the reordering, the amount of apparent randomness in accessing blocks by various games or applications. The blocks may be assigned to the minority partition. The block with a number of occurrences having at least the bin-specific average of number of occurrences may be assigned to the majority partition.

In the following the determination of the ordering of the blocks in the majority partition of the reordered image is described. However, it is noted that the approach described below may also be employed independent of a majority partition (e.g. for all blocks of the re-ordered image irrespective of their number of occurrences).

As a result, blocks which have been requested during many application sessions will belong to the majority partition. As a first approach, the blocks may be sorted ascendingly to their individual average position in the trace statistics. However, applying this approach strictly, may lead to a fragmentation of the files, as the files having blocks with a similar average occurrence position will be intertwined. In order to avoid such a fragmentation the sorting algorithm keeps chains of subsequent block indices together as a secondary sorting criteria. A block may be considered part of a chain if its average position is in the vicinity of a certain number of blocks, such as 1.000 blocks.

Blocks with a scattering larger than 1.000 blocks may be part of a different chain and are, thus, excluded from the current chain. The obtained chain will then contain a set of coherent blocks, i.e, i, i+1, i+2, ... i+n.

Keeping the block sequence with respect to the original RAW image together keeps files implicitly locally unfragmented due to the underlying filesystem definition. The original image (RAW file) has been created only during the initial write process. Hence, the file system stores files without any fragmentation.

In order to demonstrate the concept of the above mentioned sorting algorithm, one may consider two simplified traces, wherein the array index indicates the occurrence position of the block and the value indicates the index in the original image (RAW index):

```
Trace A = [ 1, 2, 3, 7, 0, 4, 5, 6 ]

Trace B = [ 7, 4, 5, 6, 0, 1, 2, 3 ]
```

When combining these traces and calculating the average occurrence position of each block (identified by its original RAW index), the average occurrence positions for the RAW indices then become:

| RAW index | <occurrence position> |
|---|---|
| 0 | 4.0 |
| 1 | 2.5 |
| 2 | 3.5 |
| 3 | 4.5 |
| 4 | 3.0 |
| 5 | 4.0 |
| 6 | 5.0 |
| 7 | 1.5 |

The re-ordered image would be built by assigning RAW indices to average positions (and thus ordering the blocks identified by the RAW index according to the average occurrence position):

1.5 -> [ 7 ]
2.5 -> [ 1 ]
3.0 -> [ 4 ]
3.5 -> [ 2 ]
4.0 -> [ 0, 5 ]
4.5 -> [ 3 ]
5.0 -> [ 6 ]

This would yield the following re-ordered block sequence:
[ 7, 1, 4, 2, 0, 5, 3, 6 ]

It can be noted that the original coherent access patterns ([1,2,3] and [4,5,6]) are lost and this sequence would lead to a fragmentation of the data and, thus, a poor runtime performance. This can be avoided by creating chains of ascending raw indices. By keeping coherent blocks together the ordering would become:

1.5 -> [ 7 ]
2.5 -> [ 1, 2, 3, 4, 5, 6 ]
4.0 -> [ 0 ]

This would yield only a locally unfragmented sequence:
[ 7, 1, 2, 3, 4, 5, 6, 0 ]

An example of how to identify these coherent blocks or chains of blocks together is given in the following.

The sorting algorithm (in this example for the majority partition) can be illustrated by means of the following pseudo code:

```
sortMap =  Map<INT,[]> # position -> array of raw indices
lastPos = 0
maxLen  = 1000
for iRaw in {0, N_RawBlocks}:

    # if not statistically significant, move out
    isRare = block_is_rare (iRaw)
    if (isRare) moveBlockToMinorityPart (iRaw)

  avgPos = StatisticsFile[iRaw].avgPos
  if avgPos < lastPos or avgPos > lastPos + maxLen:
       lastPos = avgPos   # start a new chain
  else:
       avgPos = lastPos   # append to current chain
  sortMap[avgPos].append (iRaw)
```

The result of the algorithm is a separation of the blocks into the majority partition or the minority partition. The majority partition is then sorted according to the average positions according to the trace statistics information with keeping the data unfragmented.

Regarding the minority partition, data blocks with small occurrence values are taken out of the majority partition in order to keep the pre-load as small as possible. For instance, in the example of games, these data may be related to speedruns or other uncommon gaming behavior. The on-demand request handler can easily download or fetch the data related to those rare requests.

As the majority partition also the minority partition is being sorted according to the average position. In an example implementation the secondary sorting criteria of chaining coherent blocks is not applied. However, in other examples, the secondary sorting criteria of chaining coherent blocks may also be applied to the minority partition.

As already mentioned, data which have never been requested by any application session (N = 0) are stored in the last part of the re-ordered image according to the original index sorting. If requested they may be downloaded or fetched on demand.

The re-ordered image may then be sent to a third device for running the application at the third device, action 440.

In the following, an example implementation of a loading profile will be described. In order to predict the moment when it is safe to start the application without running out of content, a loading profile is computed. The loading profile may indicate the requested data from the re-ordered image vs. the expected access time. An example loading profile with the requested data from the reordered image on the y-axis and the expected access time on the x-axis is illustrated by the graph 810 shown in Fig. 8. Different (constant) bandwidths lead to lines of different gradients. In Fig. 8 lines for three different bandwidths (12 MBit/s, 50MBit/s, 200 MBit/s) are shown. If the line does not go below the loading profile, it can be expected that the application will not run out of content, as data will always be downloaded quicker or earlier than accessed. Thus, the intersection of the line with the y-axis needs to be chosen accordingly and indicates the required pre-load for that bandwidth.

Thus, depending on the available bandwidth the necessary pre-load size can be obtained dynamically. In order to obtain the loading profile the expected access times $< t >$ need to be computed.

The expected access times can be obtained implicitly from the sorted average positions by taking the average times from the trace statistics information into account. The time indices in the vicinity of the sorted block will likely be similar. However, due to different user behavior and the coherent block chain sorting criteria, the average time values from the trace statistics will fluctuate. The average times vs. the re-ordered image index is exemplarily shown in the graph 910 in Fig. 9.

Graph 910 shows at which time a given block of the re-ordered image is expected to be accessed. The last block indicates when the entire re-ordered image file should be fully downloaded because at this point the predictability ends. Since the timestamp of the last traced block dominates the prediction horizon, this could lead to an unwanted delta of the time horizon. Therefore, a similar approach as above is employed, meaning that timestamps in close vicinity can be handled as a regional average. The current implementation uses bins or buckets of constant width (e.g. 10.000 blocks). This approach is shown in Fig. 10, illustrating in the graph 1010 the different bins with the mean of the average access times for a respective bin indicated as a horizontal lines. Based on this smooth mean average times vs. sorted average positions histogram the monotonously rising envelope function (i.e. the loading profile) as shown in Fig. 8 is obtained. While such smoothed averages are used in some embodiments, other statistical methods (e.g. mean, medians, 1+ sigma etc.) may be used as well. More specifically, the model may be changed depending on the expected and actual shape of the curves as noted over time, or as updated by an application publisher.

The loading profile may also be transmitted to a third device for downloading a corresponding reordered image and running the application. The third device may determine its bandwidth and based thereon determine the required pre-load.

A method of running an application based on the re-ordered image (which is being data streamed) on a third device will now be described with reference to the communication chart of Fig. 1b and the flow chart 500 of Fig. 5.

The third device may start receiving a re-ordered image of the application for storing in a local storage, action 510. After receiving the determined pre-load, the third device may start running the application based on the (partially) received re-ordered image in a data streaming mode, i.e. before the re-ordered image is completely received.

The third device may employ a similar arrangement as the second device, as shown in Fig. 3. That is, the third device may mount the re-ordered image on a block device with a block device driver beneath the file system.

The block device driver will receive requests (e.g. SRBs) from the file system. All requests pointing to data which have been downloaded already will be answered directly. Requests pointing to data which have not been downloaded yet will be re-inserted into the request queue to be evaluated later again, action 530. For the missing data an additional download request will be initiated. As the data is also stored locally in the expected access order (i.e. physically in the storage), the download request fetches additional adjacent blocks as well. Adjacent blocks may be understood to be blocks logically adjacent within the re-ordered application data. The third device also employs a minifilter for avoiding that other applications create block access requests with respect to blocks not (yet) required by the application and thereby triggering undesired download requests. The range of the request can be static (such as 100 blocks) or dynamic (e.g., depending on the available bandwidth). If the delayed request is being processed again, the block device driver checks if the data is locally available. If so, the request will be responded with the missing data, i.e. the requested data is obtained from the storage and provided to the application. Otherwise, it will be inserted into the request queue again. The application in total will continue to operate the entire time. Only, if the network connection is interrupted and the data cannot be fetched in a reasonable time ("hard underflow") the game will be suspended and minimized in order to return control over the device back to the user.

Generally, the second device 110 and the third device 150 may be implemented as the same devices, i.e. applications are run on a device in a data streaming mode and at the same time block requests may be recorded for generating traces, which are fed back first to device and used for generating or optimizing a re-ordered image. In some embodiments, after a sufficiently optimized ordering, traces may not be generated as often, until prompted by an event such as a large patch, or not again so long as order optimization maintains a certain level of performance.

To maintain optimal disk performance, data will be stored according to the expected access order or occurrence position while keeping files locally unfragmented, as described above with respect to the generation of the re-ordered image.

With continued collection of user traces and the update of the trace statistics, the re-ordered image becomes partitioned in a way that also local file operations benefit: data fetches become faster compared to fetches from the native application build. To allow users, who already have a previous re-ordered image locally available, to benefit from the improved data sequence, a re-ordered image optimization can be performed by downloading an index file of the latest re-ordered image and reorder the data on the user's storage accordingly. The reordering can happen in-place by swapping single data chunks in the existing re-ordered image (low storage approach), or by copying the data chunks in the new order into a new re-ordered image file and delete the previous one (low computation approach).

Each re-ordered image belongs to a specific application build. Typically, a new application build will use a new re-ordered image and a new or some adapted training. In some cases, the size of an application, some diff algorithms cannot compute patches between re-ordered images efficiently. By identifying identical data chunks in two re-ordered images and removing them before performing the diff calculation, we can improve the results that these diff algorithms might use, resulting in small patches for the re-ordered images (small patch size approach).

By using a mapping between the shared data of the two re-ordered images, the current training state can be migrated to the new build (or updated build), giving a good starting point for the new data sequence (block order). This mapping and the final re-ordered image sequence are also sufficient for the patch algorithm to locally reorder the reusable data and download the new data from the available re-ordered image. This allows for a progressive application start during the download of the new patch data (progressive patch approach).

For applications released without a re-ordered image, users may have a native application-build already installed locally. To onboard these users to the advantages of a re-ordered image, an import creates a re-ordered image-like file from the application data without the specific filesystem and excess disk space. This file can then be patched into a re-ordered image file by either using a precalculated patch following the small patch size approach or by following the progressive patch approach for an existing re-ordered image file.

The game data from a re-ordered image file can be extracted and moved to a user-specified location by mounting the re-ordered image and performing a copy operation of the files stored on the disk. This can then be followed by the creation of registry keys and meta files to mimic a standard installation process. This export restores the native application build in usable, installed-like fashion. In other systems, different meta data may be kept. The goal though is to not impact the systems' perception of the native application as being useable.

Turning now to Fig. 11, there is shown a block diagram of a device 1100, which may be an example embodiment of a first, second or third device 100, 110, 150 according to the present disclosure. For example, device 1100 may be one of a server, a cloud server, a smartphone, a tablet computer, a notebook computer, a desktop computer or a part thereof.

Device 1100 comprises a processor 1101. Processor 1101 may represent a single processor or two or more processors, which are for instance at least partially coupled, for instance via a bus. Processor 1101 executes a program code stored in program memory 1102 (for instance program code causing device 1100) to perform one or more of the embodiments of a method according to the present disclosure or parts thereof, when executed on processor 1101, and interfaces with a main memory 1103. Program memory 1102 may also contain an operating system for processor 1101. Some or all of memories 1102 and 1103 may also be included into processor 1101.

One of or both of a main memory and a program memory of a processor (e.g. program memory 1102 and main memory 1103) could be fixedly connected to the processor (e.g. processor 1101) or at least partially removable from the processor, for instance in the form of a memory card or stick.

A program memory (e.g. program memory 1102) may for instance be a non-volatile memory. It may for instance be a FLASH memory (or a part thereof), any of a ROM, PROM, EPROM, MRAM or a FeRAM (or a part thereof) or a hard disc (or a part thereof), to name but a few examples. For example, a program memory may for instance comprise a first memory section that is fixedly installed, and a second memory section that is removable from, for instance in the form of a removable SD memory card.

A main memory (e.g. main memory 1103) may for instance be a volatile memory. It may for instance be a DRAM memory, to give non-limiting example. It may for instance be used as a working memory for processor 1101 when executing an operating system, an application, a program, and/or the like.

Processor 1101 further controls a communication interface 1104 (e.g. radio interface) configured to receive and/or transmit data and/or information. For instance, communication interface 1104 may be configured to transmit and/or receive data to/from a remote device, e.g. over the Internet. Additionally, the communication interface 1104 may further comprise a BLE and/or Bluetooth radio interface including a BLE transmitter, receiver or transceiver. For example, radio interface 1104 may additionally or alternatively comprise a WLAN radio interface including at least a WLAN transmitter, receiver or transceiver.

The components 1102 to 1104 of device 1100 may for instance be connected with processor 1101 by means of one or more serial and/or parallel busses.

It is to be understood that device 1100 may comprise various other components. For example, terminal device 1100 may optionally comprise a user interface (e.g. a touch-sensitive display, a keyboard, a touchpad, a display, etc.).

Fig. 12 is a schematic illustration of examples of tangible and non-transitory computer-readable storage media according to the present disclosure that may for instance be used to implement memory 1102 of Fig. 11. To this end, Fig. 12 displays a flash memory 1200, which may for instance be soldered or bonded to a printed circuit board, a solid-state drive 1201 comprising a plurality of memory chips (e.g. Flash memory chips), a magnetic hard drive 1202, a Secure Digital (SD) card 1203, a Universal Serial Bus (USB) memory stick 1204, an optical storage medium 1205 (such as for instance a CD-ROM or DVD) and a magnetic storage medium 1206.

Any presented connection in the described embodiments is to be understood in a way that the involved components are operationally coupled. Thus, the connections can be direct or indirect with any number or combination of intervening elements, and there may be merely a functional relationship between the components.

Further, as used in this text, the term 'circuitry' refers to any of the following:

(a) hardware-only circuit implementations (such as implementations in only analog and/or digital circuitry)
(b) combinations of circuits and software (and/or firmware), such as: (i) to a combination of processor(s) or (ii) to sections of processor(s)/ software (including digital signal processor(s)), software, and memory(ies) that work together to cause an apparatus, such as a mobile phone, to perform various functions) and
(c) to circuits, such as a microprocessor(s) or a section of a microprocessor(s), that re-quire software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or section of a processor and its (or their) accompanying software and/or firmware. The term 'circuitry' also covers, for example, a baseband integrated circuit or applications processor integrated circuit for a mobile phone.

Any of the processors mentioned in this text, in particular but not limited to processors 1101 of Fig. 11, could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Moreover, any of the actions or steps described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

Moreover, any of the actions described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

The wording "A, or B, or C, or a combination thereof' or "at least one of A, B and C" may be understood to be not exhaustive and to include at least the following: (i) A, or (ii) B, or (iii) C, or (iv) A and B, or (v) A and C, or (vi) B and C, or (vii) A and B and C.

It will be understood that the embodiments disclosed herein are only exemplary, and that any feature presented for a particular exemplary embodiment may be used with any aspect of the present disclosure on its own or in combination with any feature presented for the same or another particular exemplary embodiment and/or in combination with any other feature not mentioned.

## Claims

1. A method for generating re-ordered application data from original application data, performed by at least a first device, the method comprising:

   - generating trace statistics information based on multiple obtained traces of respective application sessions, each trace comprising data chunk access information collected during a respective application session, wherein the trace statistics information comprises information on a determined occurrence position of a respective data chunk based on respective occurrence positions of the respective data chunk in the obtained traces;
   - generating the re-ordered application data by at least partially ordering the data chunks in the re-ordered application data at least based on the determined occurrence position of respective data chunks.

2. The method of claim 1, wherein the determined occurrence position is an average occurrence position of a respective data chunk in the obtained traces.

3. The method of claim 1 or 2, wherein chains of data chunks having subsequent indices in the original application data are at least partially maintained.

4. The method of claim 3, wherein a data chunk having a certain index in the original application data is considered a part of a chain to be maintained in the re-ordered application data when its determined occurrence position is within a predefined number of data chunks from the determined occurrence position of the data chunk having the previous index in the original application data.

5. The method of any of claims 1-4, the method comprising:

   - assigning a currently assessed data chunk to a new chain of data chunks, in case a determined occurrence position of the currently assessed data chunk is lower than a determined occurrence position of a previously assessed data chunk or whether the determined occurrence position of the currently assessed data chunk is larger than a predefined threshold higher than the determined occurrence position of the previously assessed data chunk, and
   - otherwise appending the data chunk to a current chain of data chunks.

6. The method of any of claims 1-5, wherein the re-ordered application data comprises partitions, the partitions at least comprising a majority partition and a minority partition, wherein the trace statistics information comprises information on a number of occurrences of a respective data chunk in the obtained traces, the method comprising:

- assigning data chunks either to the majority partition or the minority partition based on the information on a number of occurrences of the respective data chunks.

**7.** The method of claim 6, wherein said ordering of the data chunks is at least performed for data chunks assigned to the majority partition.

**8.** The method of any of claims 6 or 7, wherein said assigning of data chunks into the majority partition and the minority partition of the re-ordered application data is performed bin-wise for bins of determined occurrence positions.

**9.** The method of any of claims 6-8, wherein, for a separation of data chunks between the majority partition and the minority partition, data chunks with a sufficiently large number of occurrences are assigned to the majority partition, wherein data chunks without a sufficiently large number of occurrences are assigned to the minority partition.

**10.** The method of claim 9, wherein the number of occurrences is considered sufficiently large or small when compared to the numbers of occurrences of data chunks within a respective predefined bin of determined occurrence positions.

**11.** The method of claim 9 or 10, wherein a number of occurrences is considered sufficiently large in case the number of occurrences is above a predefined threshold, where the threshold is preferably a local threshold based on the numbers of occurrences of data chunks within a respective predefined bin of determined occurrence positions.

**12.** The method of any of claims 1-11, the method comprising one or more of:

- receiving traces from multiple second devices, in particular as recorded according to a method of any of claims 19-21;
- sending the re-ordered application data to a third device based on the data chunk order of the re-ordered application data for running the application at the third device, in particular according to a method of any of claims 22-27;

**13.** The method of any of claims 1-12, the method comprising:

- determining a loading profile indicating the overall data required from the re-ordered application data when running the application from the re-ordered application data in dependence of time.

**14.** The method of claim 13, wherein the trace statistics information comprises information on an average access time of a respective data chunk in the obtained traces, wherein the loading profile is determined based on the average access times of respective data chunks of the reordered application data.

**15.** The method according to claims 14, wherein the average access time of respective data chunks of the re-ordered application data is assumed to be, for data chunks within a bin of data chunks of the re-ordered application data, an average of the average access times within the bin.

**16.** The method of any of claims 13-15, the method comprising:

- sending information representative of the loading profile for determining a dynamic pre-load based on a bandwidth available for downloading the re-ordered application data.

**17.** The method of any of claims 1-16, the method comprising:

- obtaining a patch for the re-ordered application data based on an unpatched re-ordered application data and patched re-ordered application data.

**18.** A method of sending application data, in particular performed by a first device, the method comprising:

- sending re-ordered application data to a third device based on a data chunk order of the reordered application data for running the application at the third device, wherein the reordered application data has been generated from original application data according to a method of any of claims 1-17.

**19.** A method of recording a trace of an application session, performed by at least a second device, the method comprising:

- running a session of the application;
- recording a trace of the application session, the trace comprising data chunk access information collected during the application session;
- at least partially intercepting data chunk access of one or more other applications from being recorded in the data chunk access information of the application session.

**20.** The method of claim 19, wherein the recording of a trace is performed by a device driver and wherein the intercepting of data chunk access is performed by a filter or a file system.

**21.** The method of claim 19 or 20, the method comprising:

- sending the trace of the application session to a first device for generating re-ordered application data, in particular according to a method of any of claims 1-17.

**22.** A method of running an application, performed at least by a third device, the method comprising:

- receiving re-ordered application data of the application for storing in a local storage, wherein the data chunks in the re-ordered application data are ordered in an expected access order when running the application,
- running the application based on the received re-ordered application data, wherein in case a request of the application requests one or more data chunks, which are already present in the local storage, the request is answered with the one or more data chunks present in the local storage, and in case a request of the application requests one or more data chunks, which are not yet present in the local storage, the request is re-inserted into the request queue.

**23.** The method of claim 22, the method comprising:

- receiving information representative of a loading profile indicating the overall data requested from the re-ordered application data when running the application from the reordered application data in dependence of time;
- determining a dynamic pre-load based on a bandwidth available at the third device for downloading the re-ordered application data.

**24.** The method of claim 22 or 23, the method comprising:

- in case a request of the application requests one or more data chunks, which are not yet present in the local storage, sending a download request to obtain at least the one or more data chunks, which are not yet present in the local storage.

**25.** The method of any of claims 22-24, the method comprising one or more of:

- applying a patch to the re-ordered application data.
- obtaining an index file created based on updated re-ordered application data and updating a data chunk order of the re-ordered application data based on the index file so as to obtain updated re-ordered application data;
- converting locally stored original application data of the application into the re-ordered application data;
- converting the re-ordered application data into original application data.

**26.** The method of any of claims 22-25, the method comprising:

- at least partially intercepting requests for data chunks of one or more other applications.

**27.** The method of any of claims 22-26, wherein the re-ordered application data has been generated based on a method of any of claims 1-17.

**28.** A device comprising means for performing a method of any of claims 1-27.

**29.** A system comprising one or more of:

- a first device comprising means for performing a method of any of claims 1-18;
- a second device comprising means for performing a method of any of claims 19-21;
- a third device comprising means for performing a method of any of claims 22-27.

**30.** A computer program comprising instructions, which, when executed by a device, cause the device to perform a method according to any of claims 1-27.

**31.** A computer readable storage medium having stored thereon the computer program according to claim 30.

**32.** Re-ordered application data, wherein the re-ordered application data has been generated according to any of claims 1-17.

**Amended claims in accordance with Rule 137(2) EPC.**

**1.** A method for generating re-ordered application data from original application data of an application, performed by at least a first device, the method for generating re-ordered application data comprising:

- generating (420) trace statistics information based on multiple obtained traces of respective application sessions, each trace comprising data chunk access information collected during a respective application session, during which the application accesses or requests data chunks required for running the application, wherein the trace statistics information comprises information on a determined occurrence position of a respective data chunk based on respective occurrence positions of the respective data chunk in the obtained traces;
- generating (430) the re-ordered application data by at least partially ordering the data chunks in the re-ordered application data at least based on the determined occurrence position of respective data chunks.

**2.** The method of claim 1, wherein the determined occurrence position is an average occurrence position of a respective data chunk in the obtained traces.

**3.** The method of claim 1 or 2, wherein chains of data chunks having subsequent indices in the original application data are at least partially maintained.

**4.** The method of claim 3, wherein a data chunk having a certain index in the original application data is considered a part of a chain to be maintained in the re-ordered application data when its determined occurrence position is within a predefined number of data chunks from the determined occurrence position of the data chunk having the previous index in the original application data.

**5.** The method of any of claims 1-4, the method for generating re-ordered application data comprising:

- assigning a currently assessed data chunk to a new chain of data chunks, in case a determined occurrence position of the currently assessed data chunk is lower than a determined occurrence position of a previously assessed data chunk or whether the determined occurrence position of the currently assessed data chunk is larger than a predefined threshold higher than the determined occurrence position of the previously assessed data chunk, and
- otherwise appending the data chunk to a current chain of data chunks.

**6.** The method of any of claims 1-5, wherein the re-ordered application data comprises partitions, the partitions at least comprising a majority partition and a minority partition, wherein the trace statistics information comprises information on a number of occurrences of a respective data chunk in the obtained traces, the method for generating re-ordered application data comprising:

- assigning data chunks either to the majority partition or the minority partition based on the information on a number of occurrences of the respective data chunks.

**7.** The method of claim 6, wherein said ordering of the data chunks is at least performed for data chunks assigned to the majority partition.

**8.** The method of any of claims 6 or 7, wherein said assigning of data chunks into the majority partition and the minority partition of the re-ordered application data is performed bin-wise for bins of determined occurrence positions.

**9.** The method of any of claims 6-8, wherein, for a separation of data chunks between the majority partition and the minority partition, data chunks with a sufficiently large number of occurrences are assigned to the majority partition, wherein data chunks without a sufficiently large number of occurrences are assigned to the minority partition.

**10.** The method of claim 9, wherein the number of occurrences is considered sufficiently large or small when compared to the numbers of occurrences of data chunks within a respective predefined bin of determined occurrence positions.

**11.** The method of claim 9 or 10, wherein a number of occurrences is considered sufficiently large in case the number of occurrences is above a predefined threshold, where the threshold is preferably a local threshold based on the numbers of occurrences of data chunks within a respective predefined bin of determined occurrence positions.

**12.** The method of any of claims 1-11, the method for generating re-ordered application data comprising one or more of:

- receiving (410) traces from multiple second devices, in particular as recorded according to a method of any of claims 18-20;
- sending (440) the re-ordered application data to a third device based on the data chunk order of the re-ordered application data for running the application at the third device, in particular according to a method of any of claims 21-25;

**13.** The method of any of claims 1-12, the method for generating re-ordered application data comprising:

- determining a loading profile indicating the overall data required from the re-ordered application data when running the application from the re-ordered application data in dependence of time.

**14.** The method of claim 13, wherein the trace statistics information comprises information on an average access time of a respective data chunk in the obtained traces, wherein the loading profile is determined based on the average access times of respective data chunks of the re-ordered application data.

**15.** The method according to claims 14, wherein the average access time of respective data chunks of the re-ordered application data is assumed to be, for data chunks within a bin of data chunks of the re-ordered application data, an average of the average access times within the bin.

**16.** The method of any of claims 13-15, the method for generating re-ordered application data comprising:

- sending information representative of the loading profile for determining a dynamic pre-load based on a bandwidth available for downloading the re-ordered application data.

**17.** The method of any of claims 1-16, the method for generating re-ordered application data comprising:

- obtaining a patch for the re-ordered application data based on an unpatched re-ordered application data and patched re-ordered application data.

**18.** The method of any of claims 1-17, the method further being a method of recording a respective trace of an application session, performed by at least a second device, the method of recording comprising:

- running (210) a respective session of the application;
- recording (220) a respective trace of the application session, the trace comprising data chunk access information collected during the application session;
- at least partially intercepting (230) data chunk access of one or more other applications from being recorded in the data chunk access information of the application session.

**19.** The method of claim 18, wherein the recording of a trace is performed by a device driver and wherein the intercepting of data chunk access is performed by a filter or a file system.

**20.** The method of claim 18 or 19, the method of recording comprising:

- sending the trace of the application session to the first device for generating the re-ordered application data.

**21.** The method of any of claims 1-20, the method further being a method of running the application, performed at least by a third device, the method of running the application comprising:

- Receiving (510) the re-ordered application data of the application for storing in a local storage, wherein the data chunks in the re-ordered application data are ordered in an expected access order when running the application,
- running (520) the application based on the received re-ordered application data, wherein in case a request of the application requests one or more data chunks, which are already present in the local storage, the request is answered with the one or more data chunks present in the local storage, and in case a request of the application requests one or more data chunks, which are not yet present in the local storage, the request is re-inserted (530) into a request queue for requests of the application.

**22.** The method of claim 21, the method of running the application comprising:

- receiving information representative of a loading profile indicating the overall data requested from the re-ordered application data when running the application from the re-ordered application data in dependence of time;
- determining a dynamic pre-load based on a bandwidth available at the third device for downloading the re-ordered application data.

**23.** The method of claim 21 or 22, the method of running the application comprising:

- in case a request of the application requests one or more data chunks, which are not yet present in the local storage, sending a download request to obtain at least the one or more data chunks, which are not yet present in the local storage.

**24.** The method of any of claims 21-23, the method of running the application comprising one or more of:

- applying a patch to the re-ordered application data.
- obtaining an index file created based on updated re-ordered application data and updating a data chunk order of the re-ordered application data based on the index file so as to obtain updated re-ordered application data;
- converting locally stored original application data of the application into the re-ordered application data;
- converting the re-ordered application data into original application data.

**25.** The method of any of claims 21-24, the method of running the application comprising:

- at least partially intercepting requests for data chunks of one or more other applications.

**26.** A device or system comprising means for performing a method of any of claims 1-25.

**27.** A computer program comprising instructions, which, when executed by a device, cause the device to perform a method according to any of claims 1-25.

**28.** A computer readable storage medium having stored thereon the computer program according to claim 27.

**29.** Re-ordered application data, wherein the re-ordered application data has been generated according to any of claims 1-25.

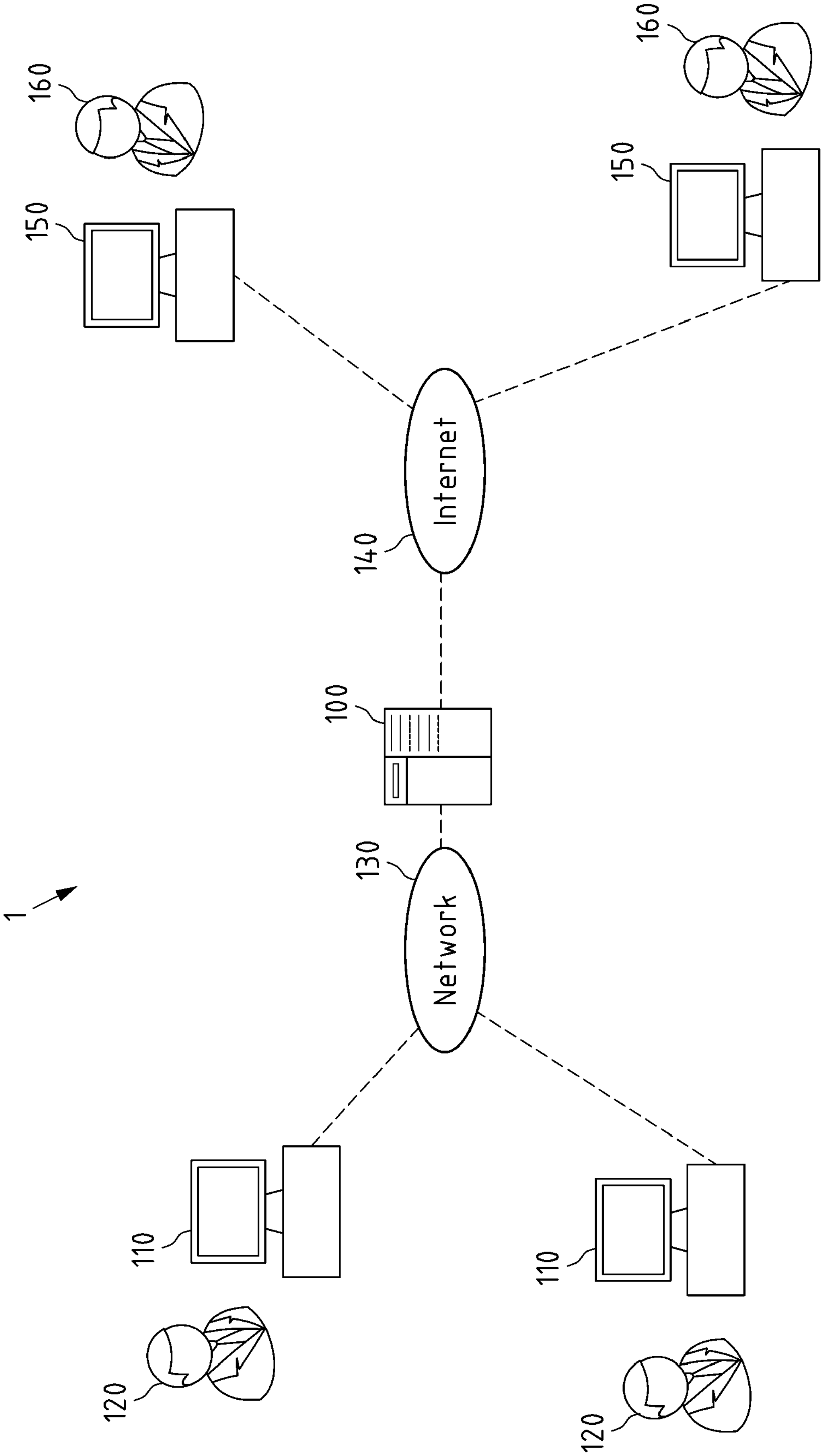


Fig.1a

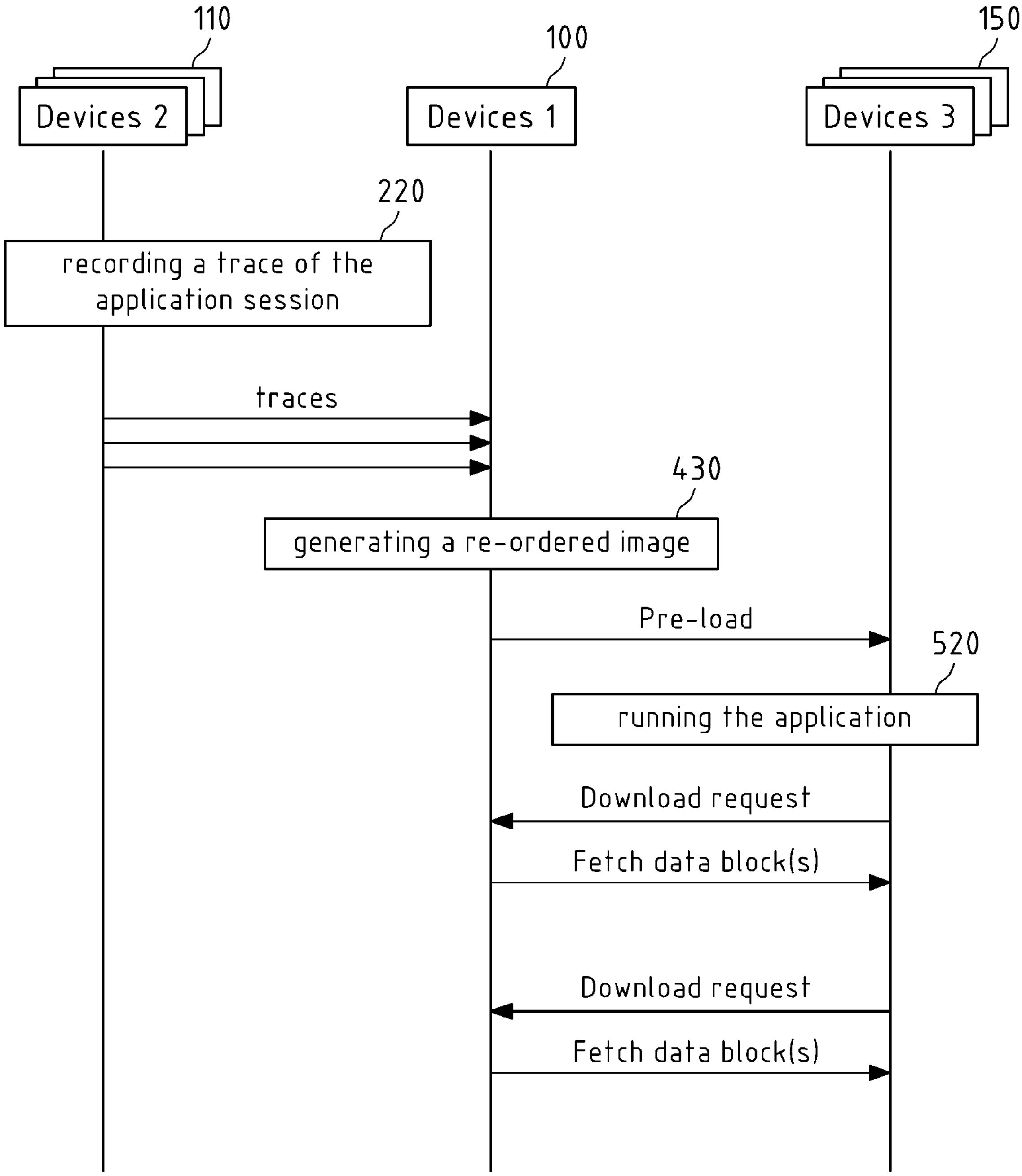
110
100
150
Devices 2
Devices 1
Devices 3
220
recording a trace of the application session
traces
430
generating a re-ordered image
Pre-load
520
running the application
Download request
Fetch data block(s)
Download request
Fetch data block(s)

Fig.1b

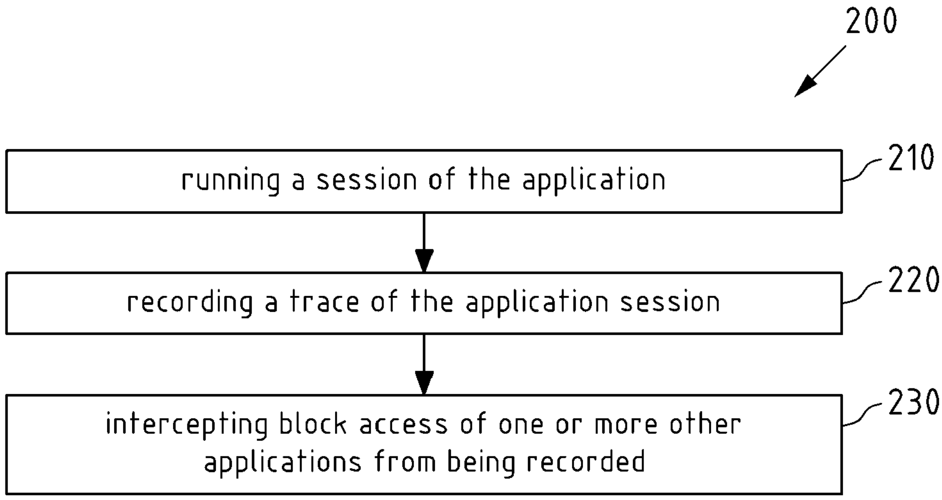
200
running a session of the application
210
recording a trace of the application session
220
intercepting block access of one or more other applications from being recorded
230

Fig.2

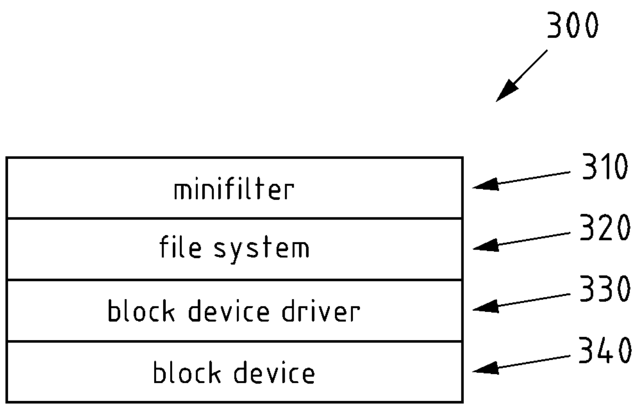
300
minifilter
310
file system
320
block device driver
330
block device
340

Fig.3

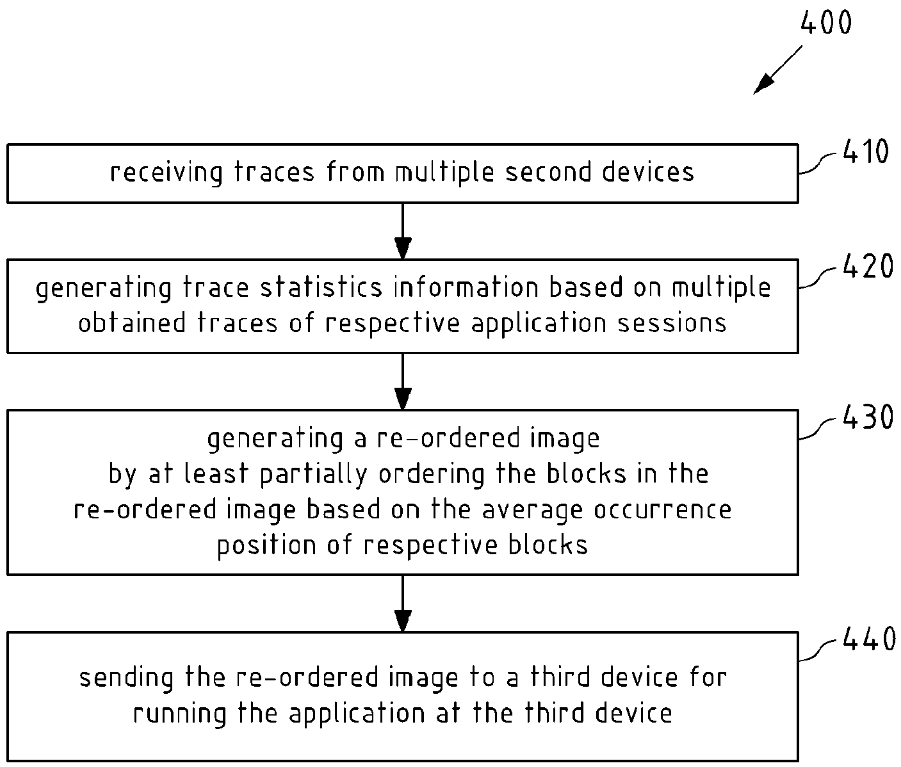
400
receiving traces from multiple second devices
410
generating trace statistics information based on multiple obtained traces of respective application sessions
420
generating a re-ordered image by at least partially ordering the blocks in the re-ordered image based on the average occurrence position of respective blocks
430
sending the re-ordered image to a third device for running the application at the third device
440

Fig.4

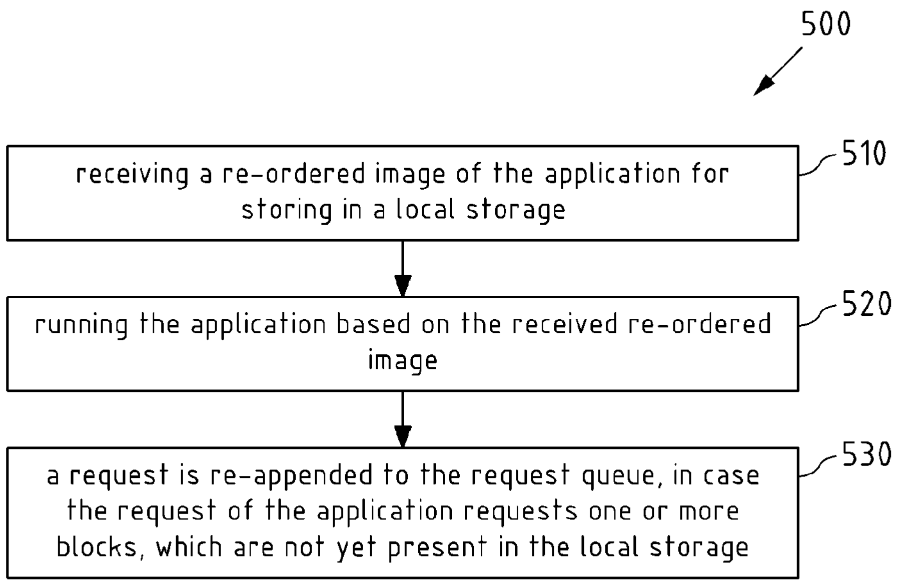
500
receiving a re-ordered image of the application for storing in a local storage
510
running the application based on the received re-ordered image
520
a request is re-appended to the request queue, in case the request of the application requests one or more blocks, which are not yet present in the local storage
530

Fig.5

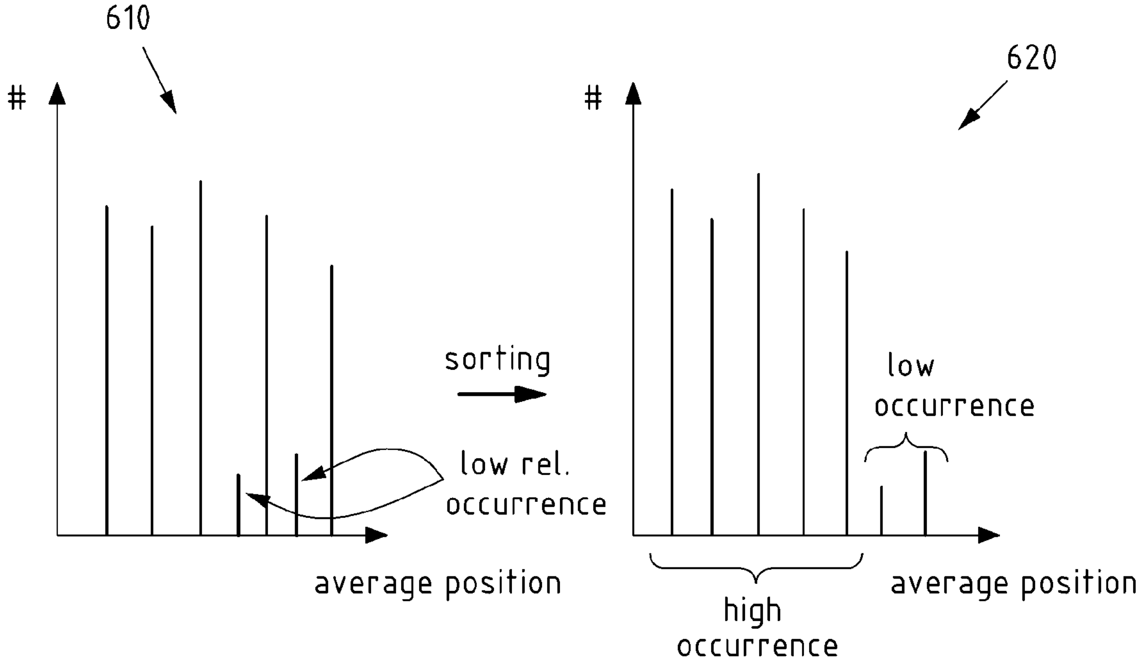
610
620
#
#
sorting
low rel.
occurrence
low
occurrence
average position
average position
high
occurrence

Fig.6

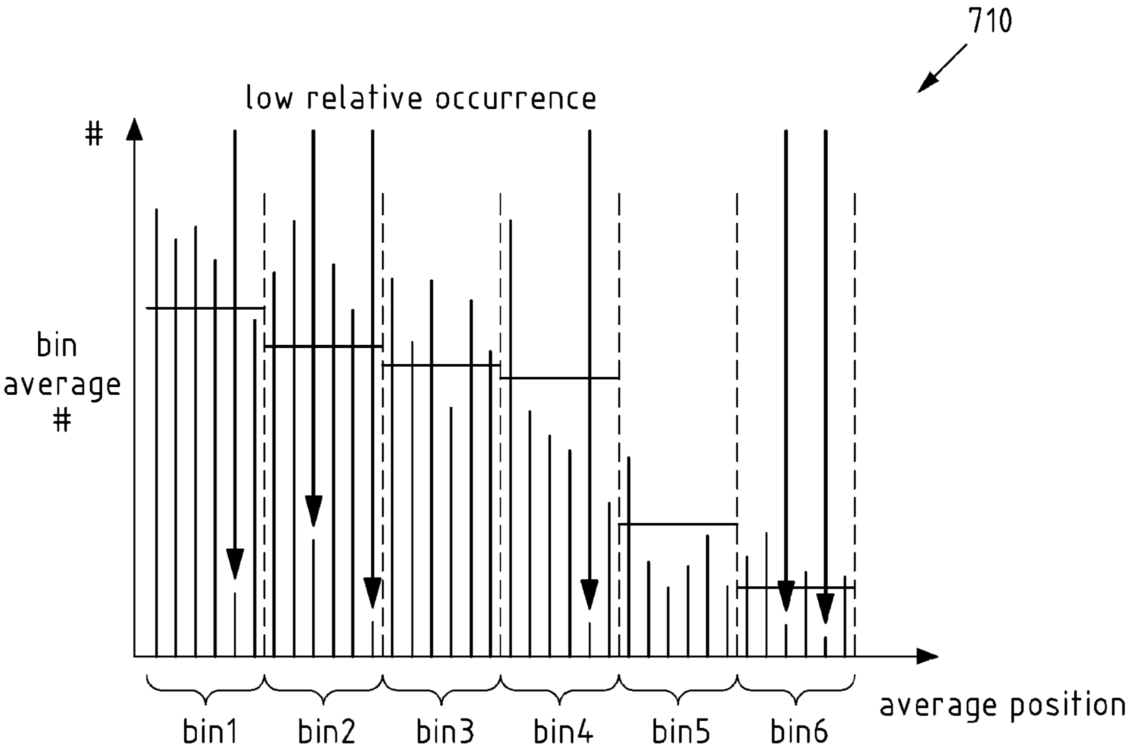
710
low relative occurrence
#
bin
average
#
bin1
bin2
bin3
bin4
bin5
bin6
average position

Fig.7

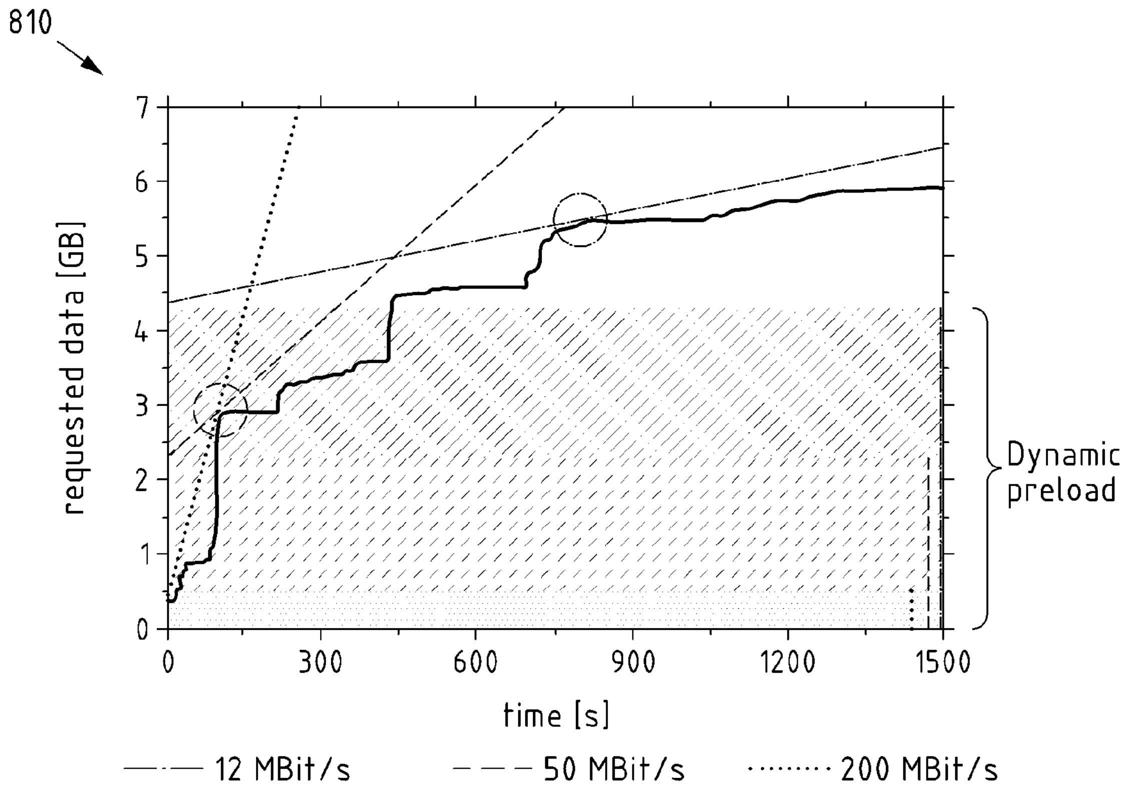
810
7
6
5
4
3
2
1
0
requested data [GB]
0
300
600
900
1200
1500
time [s]
Dynamic preload
12 MBit/s
50 MBit/s
200 MBit/s

Fig.8

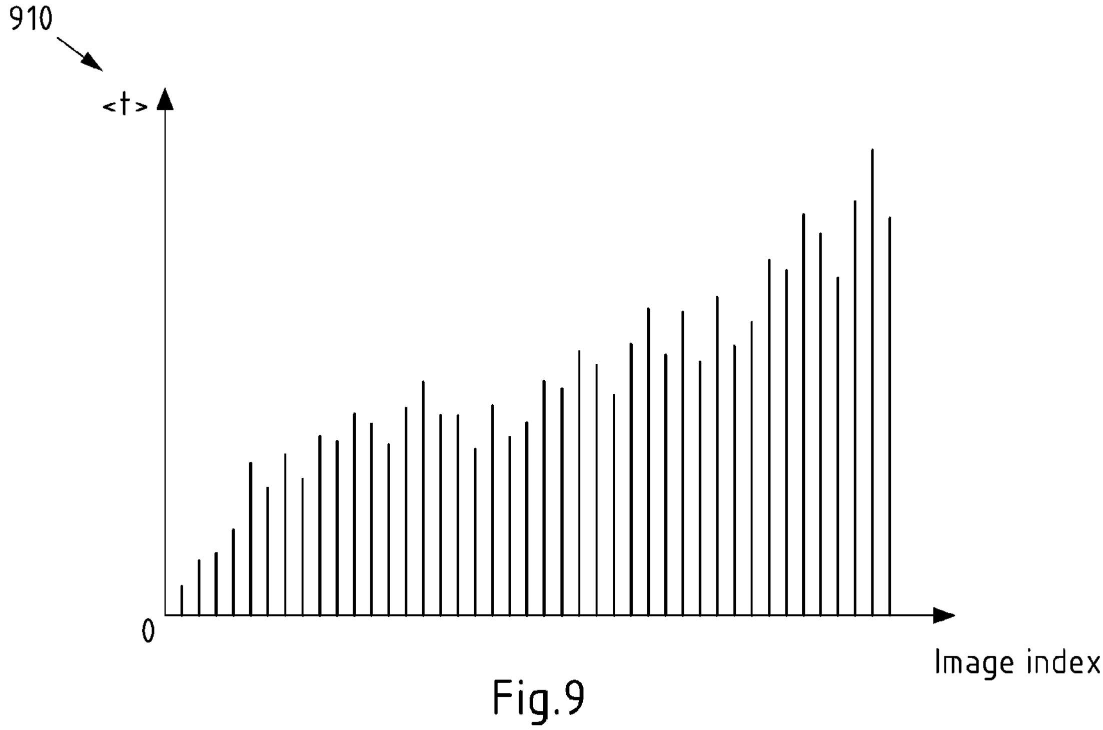
910
<t>
0
Image index

Fig.9

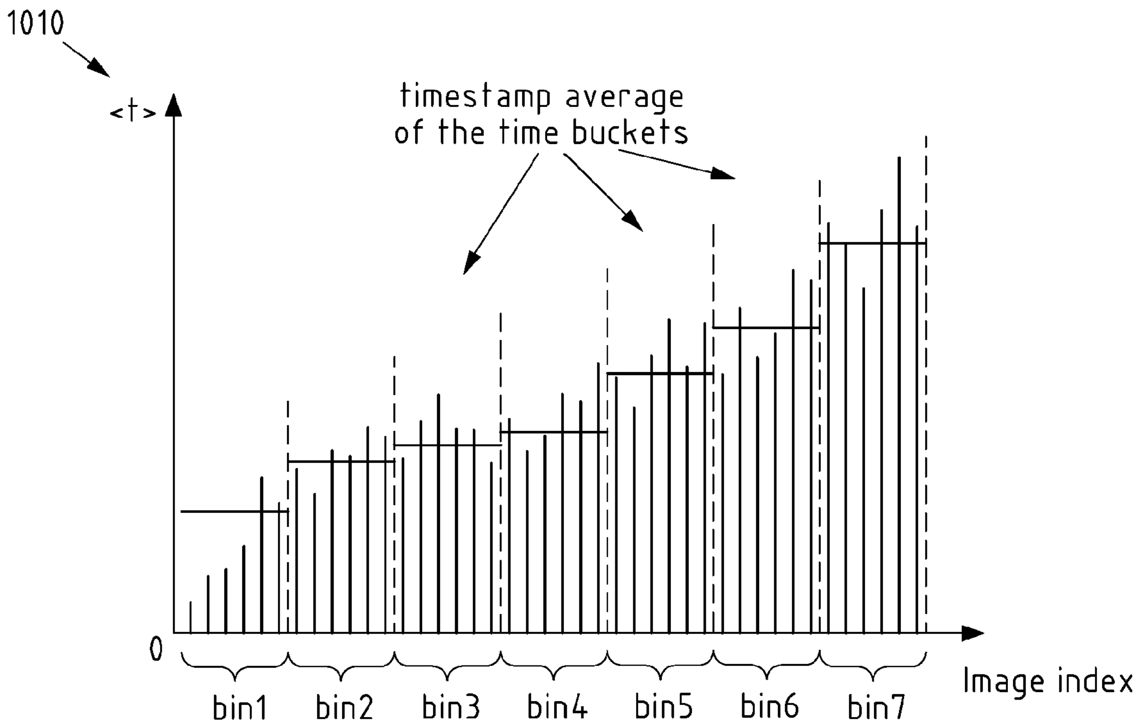
1010
<t>
timestamp average
of the time buckets
0
bin1
bin2
bin3
bin4
bin5
bin6
bin7
Image index

Fig.10

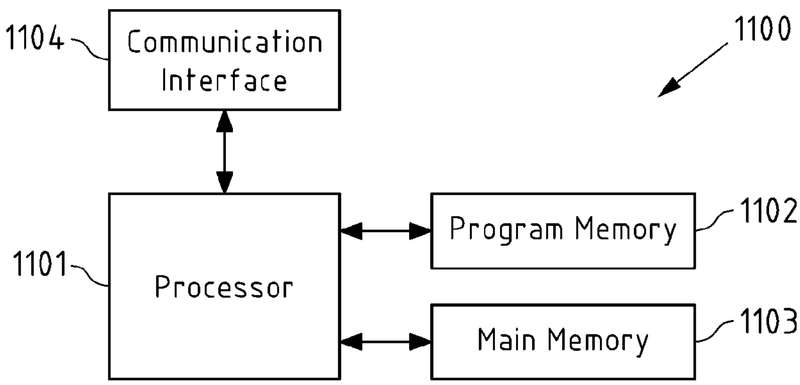
1104
Communication
Interface
1100
1101
Processor
Program Memory
1102
Main Memory
1103

Fig.11

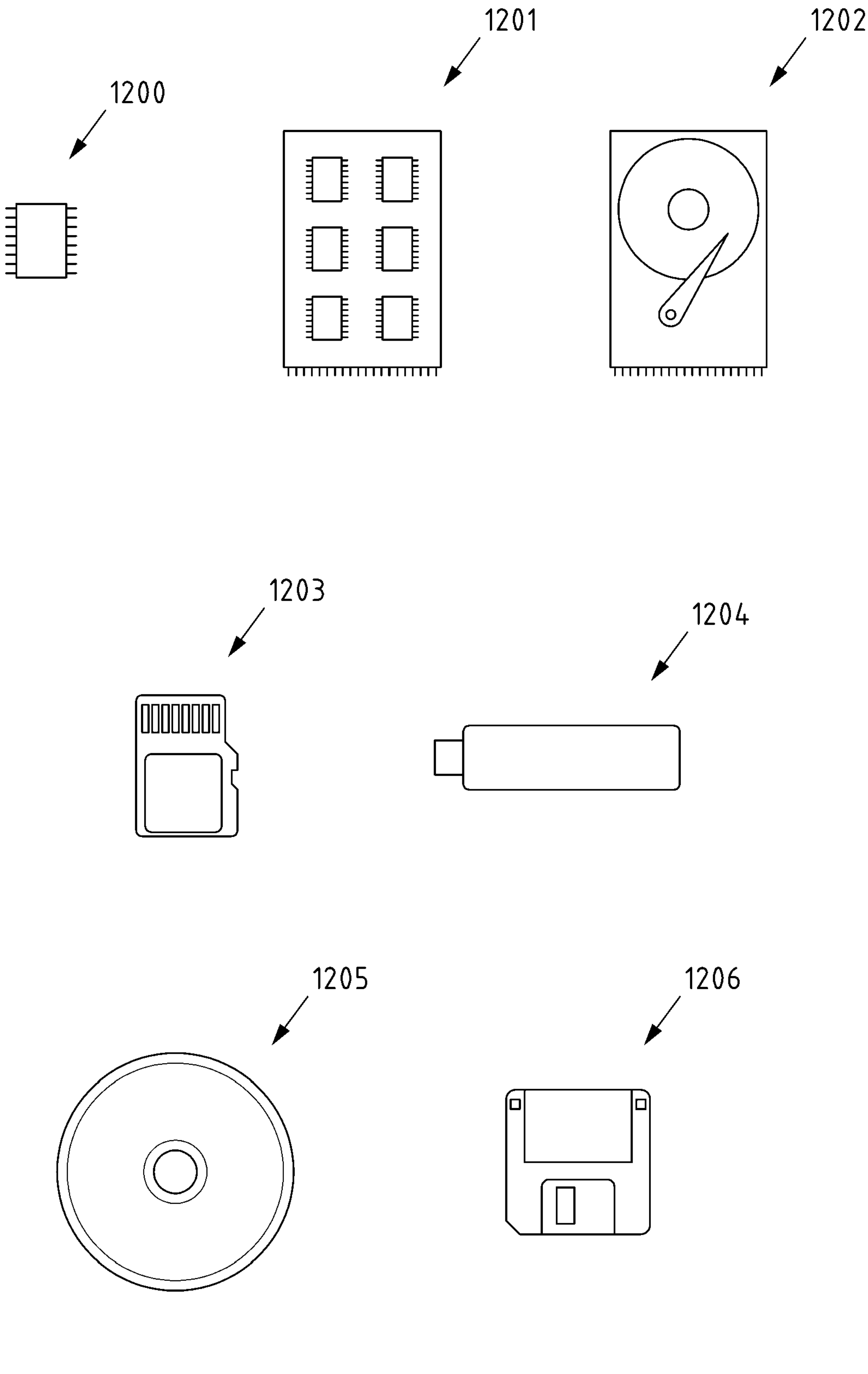


Fig.12

Europäisches Patentamt
European Patent Office
Office européen des brevets

# EUROPEAN SEARCH REPORT

Application Number
EP 24 18 0811

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2009/083806 A1 (BARRETT PETER T [US] ET AL) 26 March 2009 (2009-03-26)<br>* the whole document * | 1,18, 28-32<br>2-17 | INV.<br>H04L67/131<br>H04L65/70<br>H04L67/60<br>H04N21/81<br>H04N21/84<br>H04L67/566<br>H04L67/568<br>H04L43/028 |
| A | US 2022/239720 A1 (MADANAPALLI SHARAT CHANDRA [AU] ET AL) 28 July 2022 (2022-07-28)<br>* the whole document * | 1-18, 28-32 | |
| X<br>A | US 2016/381054 A1 (AGAIAN SOS S [US] ET AL) 29 December 2016 (2016-12-29)<br>* the whole document * | 19,20, 28-32<br>21 | |
| A | CN 116 501 176 A (4U BEIJING TECH CO LTD) 28 July 2023 (2023-07-28)<br>* the whole document * | 19-21, 28-32 | |
| X<br>A | CN 109 040 018 B (SHENZHEN TCL DIGITAL TECHNOLOGY CO LTD) 23 February 2021 (2021-02-23)<br>* the whole document * | 22,27-32<br>23-26 | TECHNICAL FIELDS SEARCHED (IPC) |
| A | US 2009/138479 A1 (CHIU CHIH-HUNG [TW]) 28 May 2009 (2009-05-28)<br>* the whole document * | 19-21, 28-32 | H04L<br>H04N |

The present search report has been drawn up for all claims

| Place of search | Date of completion of the search | Examiner |
|---|---|---|
| The Hague | 28 January 2025 | Aura Marcos, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

3

EPO FORM 1503 03.82 (P04C01)

Europäisches Patentamt
European Patent Office
Office européen des brevets

Application Number
EP 24 18 0811

## CLAIMS INCURRING FEES

The present European patent application comprised at the time of filing claims for which payment was due.

- [ ] Only part of the claims have been paid within the prescribed time limit. The present European search report has been drawn up for those claims for which no payment was due and for those claims for which claims fees have been paid, namely claim(s):

- [ ] No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

- [X] All further search fees have been paid within the fixed time limit. The present European search report has been drawn up for all claims.

- [ ] As all searchable claims could be searched without effort justifying an additional fee, the Search Division did not invite payment of any additional fee.

- [ ] Only part of the further search fees have been paid within the fixed time limit. The present European search report has been drawn up for those parts of the European patent application which relate to the inventions in respect of which search fees have been paid, namely claims:

- [ ] None of the further search fees have been paid within the fixed time limit. The present European search report has been drawn up for those parts of the European patent application which relate to the invention first mentioned in the claims, namely claims:

- [ ] The present supplementary European search report has been drawn up for those parts of the European patent application which relate to the invention first mentioned in the claims (Rule 164 (1) EPC).

Europäisches Patentamt
European Patent Office
Office européen des brevets

# LACK OF UNITY OF INVENTION SHEET B

Application Number
EP 24 18 0811

The Search Division considers that the present European patent application does not comply with the requirements of unity of invention and relates to several inventions or groups of inventions, namely:

1. claims: 1-18(completely); 28-32(partially)

   reorder application data chunks based on data chunk access related information.

---

2. claims: 19-21(completely); 28-32(partially)

   enable a selective, per-application specific trace information recording.

---

3. claims: 22-27(completely); 28-32(partially)

   enable the a smooth application running at a data chunks receiver facing potentially data chunk order-altering circumstances.

---

# ANNEX TO THE EUROPEAN SEARCH REPORT ON EUROPEAN PATENT APPLICATION NO.

EP 24 18 0811

This annex lists the patent family members relating to the patent documents cited in the above-mentioned European search report. The members are as contained in the European Patent Office EDP file on
The European Patent Office is in no way liable for these particulars which are merely given for the purpose of information.

28-01-2025

| Patent document cited in search report | Publication date | Patent family member(s) | Publication date |
|---|---|---|---|
| US 2009083806 A1 | 26-03-2009 | US 2005081243 A1 | 14-04-2005 |
| | | US 2009083806 A1 | 26-03-2009 |
| US 2022239720 A1 | 28-07-2022 | AU 2020274322 A1 | 27-01-2022 |
| | | CA 3140213 A1 | 19-11-2020 |
| | | EP 3970326 A1 | 23-03-2022 |
| | | US 2022239720 A1 | 28-07-2022 |
| | | WO 2020227781 A1 | 19-11-2020 |
| US 2016381054 A1 | 29-12-2016 | NONE | |
| CN 116501176 A | 28-07-2023 | NONE | |
| CN 109040018 B | 23-02-2021 | NONE | |
| US 2009138479 A1 | 28-05-2009 | CN 101442458 A | 27-05-2009 |
| | | US 2009138479 A1 | 28-05-2009 |

EPO FORM P0459

For more details about this annex : see Official Journal of the European Patent Office, No. 12/82